(19)

Europäisches Patentamt

European Patent Office

Office européen des brevets

(11)　**EP 4 770 084 A1**

(12)　## EUROPEAN PATENT APPLICATION
published in accordance with Art. 153(4) EPC

(43) Date of publication:
**01.07.2026　Bulletin 2026/27**

(21) Application number: **23950003.6**

(22) Date of filing: **25.08.2023**

(51) International Patent Classification (IPC):
**H04N 19/117** (2014.01)　　**H04N 19/176** (2014.01)

(52) Cooperative Patent Classification (CPC):
**H04N 19/117; H04N 19/176**

(86) International application number:
**PCT/CN2023/115055**

(87) International publication number:
**WO 2025/043408 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XU, Luhang
Dongguan, Guangdong 523860 (CN)**

(74) Representative: **Mewburn Ellis LLP
Aurora Building
Counterslip
Bristol BS1 6BX (GB)**

(54)　**ENCODING METHOD, DECODING METHOD, CODE STREAM, ENCODER, DECODER, AND
STORAGE MEDIUM**

(57)　A coding method, a bitstream, an encoder, a decoder, and a storage medium are disclosed. The method includes the following. Multiple candidate filtering models for the current block are determined. The multiple candidate filtering models are ordered to determine a target filtering-model-candidate list for the current block. A target filtering model for the current block is determined according to the target filtering-model-candidate list. Coefficients of the target filter are determined according to the target reference region. Intra prediction is performed on the current block according to the coefficients of the target filter to determine a prediction value of the current block. In this case, the candidate filtering models can be obtained through different combinations of reference regions and filters, so types of filtering models are expanded. Then, the candidate filtering models are ordered to obtain the filtering-model-candidate list, and the target filtering model is determined from the filtering-model-candidate list for intra prediction. In this way, intra prediction accuracy and coding performance can be improved.

| |
|---|
| DECODE BITSTREAM TO DETERMINE THAT TARGET PREDICTION MODE IS USED FOR CURRENT BLOCK — S1301 |
| DETERMINE MULTIPLE CANDIDATE FILTERING MODELS FOR CURRENT BLOCK — S1302 |
| ORDER MULTIPLE CANDIDATE FILTERING MODELS TO DETERMINE TARGET FILTERING-MODEL-CANDIDATE LIST FOR CURRENT BLOCK, WHERE CANDIDATE FILTERING MODEL INCLUDES CANDIDATE REFERENCE REGION AND CANDIDATE FILTER — S1303 |
| DETERMINE TARGET FILTERING MODEL FOR CURRENT BLOCK ACCORDING TO TARGET FILTERING-MODEL-CANDIDATE LIST. TARGET FILTERING MODEL INCLUDES TARGET REFERENCE REGION AND TARGET FILTER — S1304 |
| DETERMINE COEFFICIENTS OF TARGET FILTER ACCORDING TO TARGET REFERENCE REGION — S1305 |
| DETERMINE PREDICTION VALUE OF CURRENT BLOCK BY PERFORMING INTRA PREDICTION ON CURRENT BLOCK ACCORDING TO COEFFICIENTS OF TARGET FILTER — S1306 |

FIG. 13

**Description**

TECHNICAL FIELD

Embodiments of the disclosure relate to the field of video coding technology, and in particular to an encoding method, a decoding method, a bitstream, an encoder, a decoder, and a storage medium.

BACKGROUND

As the demand for video display quality increases, high-resolution videos such as high-definition (HD) and ultra-high-definition (UHD) videos emerged. However, the high-resolution videos usually contain more information and thus require greater bandwidth. To reduce bandwidth requirements, video coding standards involving video compression have been introduced.

Currently, extrapolation-based intra prediction (EIP) technology has been proposed in video coding standards. Specifically, in the EIP technology, coefficients of an extrapolation filter are obtained from reconstructed pixel values around a current block and then used for intra prediction for the current block. However, existing technical solutions still have certain drawbacks, which result in low coding performance.

SUMMARY

Embodiments of the disclosure provide an encoding method, a decoding method, a bitstream, an encoder, a decoder, and a storage medium. By performing different combinations of reference regions and filters to obtain candidate filtering models, types of filtering models are expanded. The candidate filtering models are ordered to obtain a filtering-model-candidate list, and a target filtering model is determined from the filtering-model-candidate list for intra prediction. In this way, intra prediction accuracy and coding performance can be improved.

Technical solutions of the embodiments of the disclosure may be implemented as follows.

In a first aspect, embodiments of the disclosure provide a decoding method. The method is applied to a decoder and includes the following. A bitstream is decoded to determine that a target prediction mode is used for a current block. Multiple candidate filtering models for the current block are determined. The multiple candidate filtering models are ordered to determine a target filtering-model-candidate list for the current block, where the candidate filtering model includes a candidate reference region and a candidate filter. A target filtering model for the current block is determined according to the target filtering-model-candidate list, where the target filtering model includes a target reference region and a target filter. Coefficients of the target filter are determined according to the target reference region. Intra prediction is performed on the current block according to the coefficients of the target filter to determine a prediction value of the current block.

In a second aspect, embodiments of the disclosure provide an encoding method. The method is applied to an encoder and includes the following. Multiple candidate filtering models for the current block are determined. The multiple candidate filtering models are ordered to determine a target filtering-model-candidate list for the current block, where the candidate filtering model includes a candidate reference region and a candidate filter. A target filtering model for the current block is determined according to the target filtering-model-candidate list, where the target filtering model includes a target reference region and a target filter. Coefficients of the target filter are determined according to the target reference region. Intra prediction is performed on the current block according to the coefficients of the target filter to determine a prediction value of the current block. An encoding decision is made according to the prediction value and an original value of the current block to determine whether a target prediction mode is used for the current block, and prediction mode indication information is encoded.

In a third aspect, embodiments of the disclosure provide a bitstream. The bitstream is generated by performing bit encoding according to information to be encoded, where the information to be encoded includes at least one of the following: an index value of a target filtering model for a current block, a residual value of the current block, prediction mode indication information, and reordering indication information of the current block. The prediction mode indication information is used for indicating whether a target prediction mode is used for the current block. The reordering indication information is used for indicating whether template matching is used for the current block to reorder a filtering-model-candidate list.

In a fourth aspect, embodiments of the disclosure provide an encoder. The encoder includes a first determining unit, a first prediction unit, and an encoding unit. The first determining unit is configured to determine multiple candidate filtering models for the current block. The first determining unit is further configured to order the multiple candidate filtering models to determine a target filtering-model-candidate list for the current block, where the candidate filtering model includes a candidate reference region and a candidate filter. The first determining unit is further configured to determine a target filtering model for the current block according to the target filtering-model-candidate list, where the target filtering model includes a target reference region and a target filter. The first determining unit is further configured to determine coefficients of the target filter according to the target reference region. The first prediction unit is configured to perform intra prediction on the current block according to the coefficients of the target filter to determine a prediction value of the current block. The encoding unit is configured to make an encoding decision according to the prediction value and an original value of the current block to determine whether a target prediction mode is used for the current block, and prediction mode indication information is encoded.

In a fifth aspect, embodiments of the disclosure provide an encoder. The encoder includes a first memory and a first processor. The first memory is configured to store a computer program executable by the first processor. The first processor is configured to perform the method of the second aspect when executing the computer program.

In a sixth aspect, embodiments of the disclosure provide a decoder. The decoder includes a decoding unit, a second determining unit, and a second prediction unit. The decoding unit is configured to decode a bitstream to determine that a target prediction mode is used for a current block. The second determining unit is configured to determine multiple candidate filtering models for the current block. The second determining unit is further configured to order the multiple candidate filtering models to determine a target filtering-model-candidate list for the current block, where the candidate filtering model includes a candidate reference region and a candidate filter. The second determining unit is further configured to determine a target filtering model for the current block according to the target filtering-model-candidate list, where the target filtering model includes a target reference region and a target filter. The second determining unit is further configured to determine coefficients of the target filter according to the target reference region. The second prediction unit is configured to perform intra prediction on the current block according to the coefficients of the target filter to determine a prediction value of the current block.

In a seventh aspect, embodiments of the disclosure provide a decoder. The decoder includes a second memory and a second processor. The second memory is configured to store a computer program executable by the second processor. The second processor is configured to perform the method of the first aspect when executing the computer program.

In an eighth aspect, embodiments of the disclosure provide a computer-readable storage medium. The computer-readable storage medium is configured to store a computer program which, when executed, is operable to implement the method of the first aspect or the second aspect.

Embodiments of the disclosure provide an encoding method, a decoding method, a bitstream, an encoder, a decoder, and a storage medium. By performing different combinations of reference regions and filters to obtain candidate filtering models, types of filtering models are expanded. The candidate filtering models are ordered to obtain a filtering-model-candidate list, and a target filtering model is determined from the filtering-model-candidate list for intra prediction. In this way, intra prediction accuracy and coding performance can be improved.

BRIEF DESCRIPTION OF THE DRAWINGS

FIG. 1A is a schematic diagram 1 of a calculation method for an average value $m$.
FIG. 1B is a schematic diagram 2 of a calculation method for an average value $m$.
FIG. 1C is a schematic diagram 3 of a calculation method for an average value $m$.
FIG. 2A is a schematic diagram 1 of a positional relationship between a current block and a reconstructed region.
FIG. 2B is a schematic diagram 2 of a positional relationship between a current block and a reconstructed region.
FIG. 2C is a schematic diagram 3 of a positional relationship between a current block and a reconstructed region.
FIG. 3A is a schematic diagram 1 of a shape of an extrapolation filter.
FIG. 3B is a schematic diagram 2 of a shape of an extrapolation filter.
FIG. 3C is a schematic diagram 3 of a shape of an extrapolation filter.
FIG. 4A is a schematic diagram 1 of a reference region for a current block provided in embodiments of the disclosure.
FIG. 4B is a schematic diagram 2 of a reference region for a current block provided in embodiments of the disclosure.
FIG. 4C is a schematic diagram 3 of a reference region for a current block provided in embodiments of the disclosure.
FIG. 5A is a schematic diagram 4 of a reference region for a current block provided in embodiments of the disclosure.
FIG. 5B is a schematic diagram 5 of a reference region for a current block provided in embodiments of the disclosure.
FIG. 5C is a schematic diagram 6 of a reference region for a current block provided in embodiments of the disclosure.
FIG. 6A is a schematic diagram 7 of a reference region for a current block provided in embodiments of the disclosure.
FIG. 6B is a schematic diagram 8 of a reference region for a current block provided in embodiments of the disclosure.
FIG. 6C is a schematic diagram 9 of a reference region for a current block provided in embodiments of the disclosure.
FIG. 7 is a schematic diagram of a prediction direction based on extrapolation filtering.
FIG. 8 is a schematic diagram of angular modes of intra prediction.
FIG. 9 is a schematic diagram of a 3×3 window sliding in a prediction block.

FIG. 10 is a schematic diagram of gradient magnitude values accumulated in different angular directions.

FIG. 11A is a schematic block diagram of composition of an encoder provided in embodiments of the disclosure.

FIG. 11B is a schematic block diagram of composition of a decoder provided in embodiments of the disclosure.

FIG. 12 is a schematic diagram of a network architecture of an encoding and decoding system provided in embodiments of the disclosure.

FIG. 13 is a schematic flowchart of a decoding method provided in embodiments of the disclosure.

FIG. 14 is a schematic diagram of 7 types of reference regions for a current block provided in embodiments of the disclosure.

FIG. 15 is a schematic diagram of 3 types of reference regions for a current block provided in embodiments of the disclosure.

FIG. 16 is a schematic diagram of 4 types of reference regions for a current block provided in embodiments of the disclosure.

FIG. 17 is a schematic diagram 1 of candidate filters with different tap numbers provided in embodiments of the disclosure.

FIG. 18 is a schematic diagram of a template region for a current block provided in embodiments of the disclosure.

FIG. 19A is a schematic diagram 1 of template region prediction provided in embodiments of the disclosure.

FIG. 19B is a schematic diagram 2 of template region prediction provided in embodiments of the disclosure.

FIG. 19C is a schematic diagram 3 of template region prediction provided in embodiments of the disclosure.

FIG. 19D is a schematic diagram 4 of template region prediction provided in embodiments of the disclosure.

FIG. 19E is a schematic diagram 5 of template region prediction provided in embodiments of the disclosure.

FIG. 20 is a schematic diagram 2 of candidate filters with different tap numbers provided in embodiments of the disclosure.

FIG. 21 is a schematic diagram of prediction directions of different filters in FIG. 20.

FIG. 22 is a schematic flowchart of an encoding method provided in embodiments of the disclosure.

FIG. 23A is a schematic diagram 1 of a distribution of linear terms and non-linear terms of an extrapolation filter provided in embodiments of the disclosure.

FIG. 23B is a schematic diagram 2 of a distribution of linear terms and non-linear terms of an extrapolation filter provided in embodiments of the disclosure.

FIG. 23C is a schematic diagram 3 of a distribution of linear terms and non-linear terms of an extrapolation filter provided in embodiments of the disclosure.

FIG. 24A is a schematic diagram 1 of a distribution of linear terms and non-linear terms of another extrapolation filter provided in embodiments of the disclosure.

FIG. 24B is a schematic diagram 2 of a distribution of linear terms and non-linear terms of another extrapolation filter provided in embodiments of the disclosure.

FIG. 24C is a schematic diagram 3 of a distribution of linear terms and non-linear terms of another extrapolation filter provided in embodiments of the disclosure.

FIG. 25A is a schematic diagram 1 of a distribution of linear terms and non-linear terms of yet another extrapolation filter provided in embodiments of the disclosure.

FIG. 25B is a schematic diagram 2 of a distribution of linear terms and non-linear terms of yet another extrapolation filter provided in embodiments of the disclosure.

FIG. 25C is a schematic diagram 3 of a distribution of linear terms and non-linear terms of yet another extrapolation filter provided in embodiments of the disclosure.

FIG. 26A is a schematic diagram 1 of a reference region of a slender current block provided in embodiments of the disclosure.

FIG. 26B is a schematic diagram 2 of a reference region of a slender current block provided in embodiments of the disclosure.

FIG. 27 is a schematic diagram of a composition structure of an encoder provided in embodiments of the disclosure.

FIG. 28 is a schematic diagram of a specific hardware structure of an encoder provided in embodiments of the disclosure.

FIG. 29 is a schematic diagram of a composition structure of a decoder provided in embodiments of the disclosure.

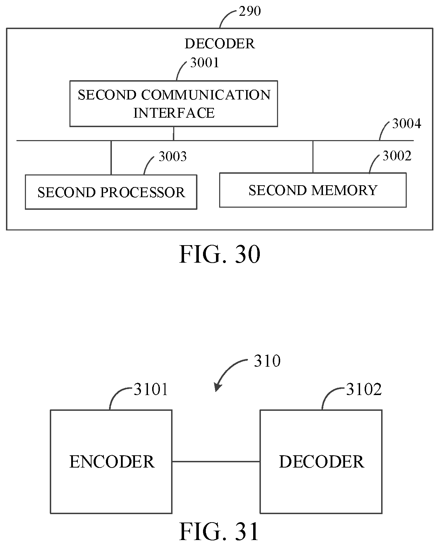

FIG. 30 is a schematic diagram of a specific hardware structure of a decoder provided in embodiments of the disclosure.

FIG. 31 is a schematic diagram of a composition structure of an encoding and decoding system provided in embodiments of the disclosure.

DETAILED DESCRIPTION

To enable a more detailed understanding of features and technical content in embodiments of the disclosure, the embodiments of the disclosure are described in detail below in conjunction with the accompanying drawings which are provided for illustrative purposes only and are not intended to limit the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" describes a subset of all possible embodiments, but it is understood that "some embodiments" may refer to the same or different subsets of all possible embodiments and may be combined with each other without conflict.

It is noted that the terms "first/second/third" in embodiments of the disclosure are merely for distinguishing similar objects and do not imply a particular ordering with respect to the objects, and it is understood that "first/second/third" may, where appropriate, be interchanged in a particular order or sequence so that embodiments of the disclosure described herein may be implemented in an order other than that illustrated or described herein.

Before further detailed description of embodiments of the disclosure, the terms and terminology involved in embodiments of the disclosure are described, and the following explanation applies to the terms and terminology involved in embodiments of the disclosure.

Joint Video Exploration Team (JVET)
Versatile Video Coding (VVC)
VVC test model (VTM)
enhanced compression mode (ECM)
extrapolation intra prediction (EIP)
multiple transform selection (MTS)
discrete cosine transform (DCT)
discrete sine transform (DST)
non-separable primary transform (NSPT)
low frequency non-separable secondary transform (LFNST)
direct current (DC)
planar mode (PLANAR)
direct mode (DM)
intra block copy (IBC)
wide angle intra prediction (WAIP)
sum of squares for error (SSE)
mean squared error (MSE)
sum of absolute difference (SAD)

It is understood that extrapolation-based intra prediction (also referred to as extrapolation intra prediction, extrapolation-based filtering intra prediction, etc., EIP for short) technology refers to a technology that obtains extrapolation filter coefficients through reconstructed pixel values around a current block and uses the coefficients for intra prediction on the current block. Specifically, the EIP technology may include one or more of the following features:

(a) Tap number of an extrapolation filter shall be greater than or equal to 2. Extrapolation filters may have multiple shapes, and a syntax element is used for controlling the shape of a selected extrapolation filter.

(b) Reconstructed pixels used for obtaining the extrapolation filter coefficients shall be contained in one or more regions around the current block, and a syntax element is used for selecting the region(s) for obtaining the extrapolation filter coefficients.

(c) The EIP may be used in luma or chroma intra block prediction.

(d) When the EIP is applied to the current block, prediction shall be performed in a specific order starting from an upper-left corner to a lower-right corner of the block.

(e) Input to the extrapolation filter may be reconstructed pixel values and/or prediction pixel values, or may be reconstructed values minus a certain value or prediction values minus the certain value.

(f) Corresponding to (e), if the certain value is subtracted from the input to the extrapolation filter, the certain value shall be added back to the extrapolation result.

(g) A maximum value and a minimum value may be obtained from reconstructed pixel values around the current block and used for restricting an output range of the extrapolation filter.

Furthermore, the EIP technology may be described in detail from the following aspects.

(I) Obtain an average value, a minimum value, and a maximum value.

In a possible embodiment, the maximum value and the minimum value of reconstructed pixels are found in a $13 \times 13$ reconstructed region around the current block, and the maximum value and the minimum value herein may be used for restricting a range of prediction results.

In a possible embodiment, a value $m$ that needs to be subtracted from an input of the extrapolation filter and added back to an output is obtained according to the following method. The value $m$ is a value used in DC mode prediction, and $m$ is a positive integer.

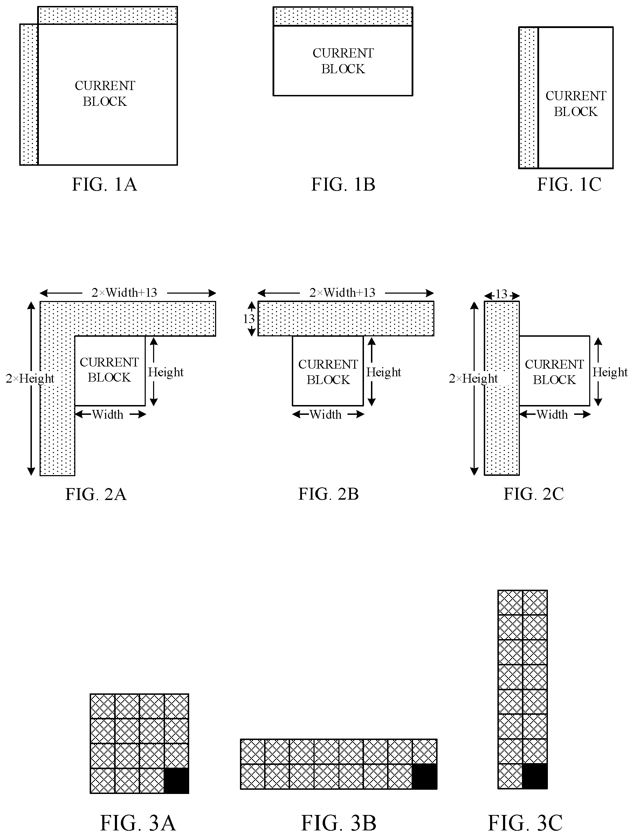

Taking FIG. 1A, FIG. 1B, and FIG. 1C as examples, the calculation method for the value $m$ can include three cases as follows.

(i) When the width of the current block equals the height of the current block, $m$ equals an average value of reconstructed pixels in a row above the current block and a column to the left of the current block, as specifically illustrated in FIG. 1A;

(ii) When the width of the current block is greater than the height of the current block, $m$ equals an average value of reconstructed pixels in the row above the current block, as specifically illustrated in FIG. 1B;

(iii) When the height of the current block is greater than the width of the current block, $m$ equals an average value of reconstructed pixels in the column to the left of the current block, as specifically illustrated in FIG. 1C.

In an implementation, the calculation method herein can also be summarized as illustrated in Table 1.

Table 1

| | |
|---|---|
| Sum = 0, numSamples = 0 | |
| if(blockWidth >= blockHeight) | |
| { | |
| for(int i = 0; i < blockWidth; i++) | |
| { | |
| Sum += aboveBuffer[i] | accumulate upper reconstructed values |
| } | |
| numSamples += blockWidth | calculate the number of samples |
| } | |
| if(blockHeight >= blockWidth) | |
| { | |
| for(int i = 0; i < blockHeight; i++) | |
| { | |
| Sum += leftBuffer[i] | accumulate left reconstructed values |
| } | |
| numSamples += blockHeight | calculate the number of samples |
| } | |
| Shift = log2(numSamples) | calculate a shift value corresponding to the number of samples |
| Offset = 1 << (Shift - 1) | calculate an offset value for rounding during shifting |
| m = (Sum + Offset) >> Shift | calculate the average value m |

(II) Obtain extrapolation filter coefficients.

In a possible embodiment, three types of 15-tap extrapolation filters and three types of reconstructed regions are defined herein.

FIG. 2A illustrates a positional relationship between a current block and a reconstructed region. As illustrated in FIG. 2A, the reconstructed region may include an upper neighboring region adjacent to an upper side of the current block and a left neighboring region adjacent to a left side of the current block. A length of the upper neighboring region is 2×Width + 13 and a width of the upper neighboring region is 13. A length of the left neighboring region is 2×Height + 13 and a width of the left neighboring region is 13. FIG. 2B illustrates another positional relationship between a current block and a reconstructed region. As illustrated in FIG. 2B, the reconstructed region may include an upper neighboring region adjacent to an upper side of the current block. A length of the upper neighboring region is 2×Width + 13 and a width of the upper neighboring region is 13. FIG. 2C illustrates yet another positional relationship between a current block and a reconstructed region. As illustrated in FIG. 2C, the reconstructed region may include a left neighboring region adjacent to a left side of the current block. A length of the left neighboring region is 2×Height + 13 and a width of the left neighboring region is 13. In FIG. 2A, FIG. 2B, and FIG. 2C, Height and Width respectively represent a height and width of the current block. It should be noted that the reconstructed regions in FIG. 2A, FIG. 2B, and FIG. 2C, i.e., 13 rows and/or 13 columns of reconstructed pixels around the current block, may be used for obtaining extrapolation filter coefficients.

FIG. 3A is a schematic diagram of a shape of an extrapolation filter. As illustrated in FIG. 3A, the shape of the extrapolation filter is a 4×4 square. FIG. 3B illustrates a schematic diagram of a shape of another extrapolation filter. As illustrated in FIG. 3B, the shape of the extrapolation filter is a 2×8 rectangle. FIG. 3C illustrates a schematic diagram of a shape of yet another extrapolation filter. As illustrated in FIG. 3C, the shape of the extrapolation filter is an 8×2 rectangle. In FIG. 3A, FIG. 3B, and FIG. 3C, grid-filled parts represent positions of inputs to the extrapolation filter, and black-filled parts represent positions of outputs of the extrapolation filter.

In this case, through different combinations of the three types of reconstructed regions and the three types of extrapolation filter shapes, 3×3 different filtering modes can be derived (each combination of a filter shape and a reconstructed region can derive one filtering mode). An encoder decides one combination of a filter shape and a reconstructed region through rate-distortion costs. Thus, when the encoder and a decoder predict the current block, extrapolation filter coefficients are first determined according to the decided filter shape and reconstructed region.

In a possible embodiment, inputs to an extrapolation filter are obtained from reconstructed pixel values. When obtaining parameters, the selected extrapolation filter slides over a selected region, with a horizontal sliding step and a vertical sliding step each being 1 pixel.

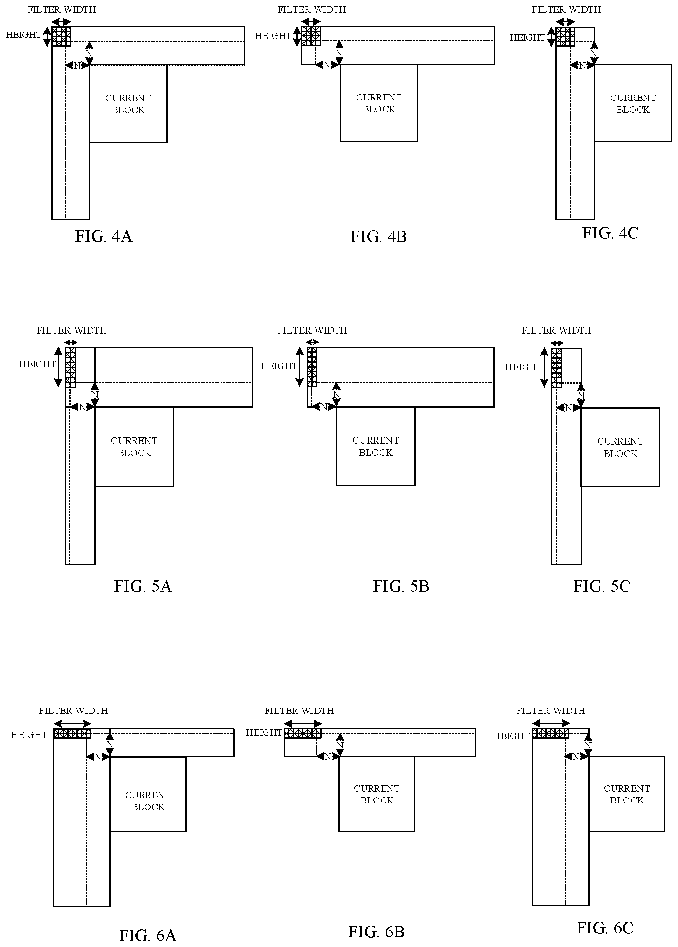

Specifically, FIG. 4A, FIG. 4B, and FIG. 4C illustrate a 4×4 filter sliding in each of three reconstructed regions, i.e., an L-shaped reconstructed region, an upper reconstructed region, and a left reconstructed region, to obtain inputs and outputs of the extrapolation filter at possible positions.

Specifically, FIG. 5A, FIG. 5B, and FIG. 5C illustrate an 8×2 filter sliding in each of three reconstructed regions, i.e., an L-shaped reconstructed region, an upper reconstructed region, and a left reconstructed region, to obtain inputs and outputs of the extrapolation filter at possible positions.

Specifically, FIG. 6A, FIG. 6B, and FIG. 6C illustrate of a 2×8 filter sliding in each of three reconstructed regions, i.e., an L-shaped reconstructed region, an upper reconstructed region, and a left reconstructed region, to obtain inputs and outputs of the extrapolation filter at possible positions.

Nine combinations can be obtained, and each of the nine combinations can derive a set of extrapolation filter coefficients. A process of solving each set of extrapolation filter coefficients involves constructing a set of autocorrelation coefficient matrices and a set of cross-correlation coefficient vectors by sliding the selected extrapolation filter over the selected region, and solving a system of linear equations constructed by the autocorrelation coefficient matrices and the cross-correlation coefficient vectors.

In this case, for the constructed Wiener-Hopf equations, specifically the autocorrelation coefficient matrices and the cross-correlation coefficient vectors, the system of linear equations are as follows:

$$
\begin{bmatrix}
\sum_{\|\mathcal{R}\|}(t[r+p_0]-m)(t[r+p_0]-m) & \cdots & \sum_{\|\mathcal{R}\|}(t[r+p_{N-1}]-m)(t[r+p_0]-m) \\
\vdots & \ddots & \vdots \\
\sum_{\|\mathcal{R}\|}(t[r+p_0]-m)(t[r+p_{N-1}]-m) & \cdots & \sum_{\|\mathcal{R}\|}(t[r+p_{N-1}]-m)(t[r+p_{N-1}]-m)
\end{bmatrix}
\begin{bmatrix} c_0 \\ \vdots \\ c_{N-1} \end{bmatrix}
$$

$$
=\begin{bmatrix}
\sum_{\|\mathcal{R}\|}(t[r]-m)(t[r+p_0]-m) \\
\vdots \\
\sum_{\|\mathcal{R}\|}(t[r]-m)(t[r+p_{N-1}]-m)
\end{bmatrix}
\qquad (1)
$$

In the above, $\mathcal{R}$ represents a selected reconstructed region, $t$ represents a reconstructed pixel value, $r$ represents a coordinate position in the reconstructed region, $p_0 \ldots p_{N-1}$ represent relative coordinates with respect to position $r$, and the relative coordinates indicate the relative coordinate relationship between positions of inputs and positions of outputs of the extrapolation filter. $c_0 \ldots c_{N-1}$ are coefficients of the extrapolation filter to be solved (also referred to as "filter coefficients"), and $m$ is a certain value subtracted from an input of the extrapolation filter (the certain value that needs to be added back to the output in this case).

Currently, for a reference software ECM, encoding complexity has increased by 6 to 8 times compared with VTM (VVC reference software), which results in high encoding costs and implementation difficulties. At an encoding end, the extrapolation filtering technology needs to perform rate-distortion screening based on 9 sets of coefficients obtained from 9 combinations of filter shapes and reconstructed region types, to determine whether the extrapolation filtering technology is used and which specific set of coefficients is used. During the process of obtaining the 9 sets of coefficients, computational time complexity is high, so that the extrapolation filtering technology brings a more than 3% increase in the time complexity at the encoding end.

(III) Perform prediction on the current block.

In a possible embodiment, a prediction process starts from an upper-left corner of a current block and proceeds in a specific order toward a lower-left corner. A prediction formula is as follows:

$$pred_r = \sum(t_{r+p_n} \times c_n) \qquad\qquad (2)$$

In the formula, $pred_r$ is a prediction result for position $r$ in the current block, $t_{r+pn}$ represents an input to the extrapolation filter. When $t_{r+p_n}$ is in a reconstructed region, a reconstructed value is used as the input to the extrapolation filter. When $t_{r+p_n}$ is in the current block, a prediction value that has been obtained is used as the input to the extrapolation filter.

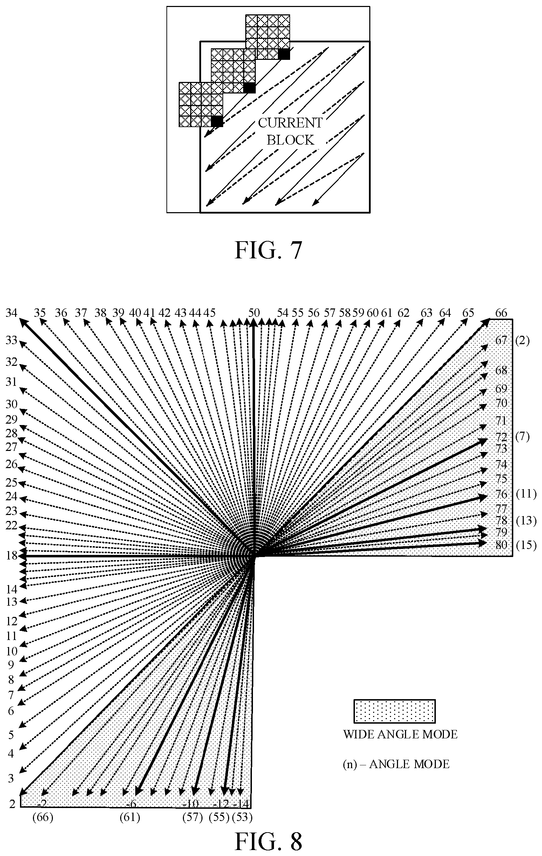

Exemplarily, FIG. 7 illustrates prediction by an extrapolation filter in a diagonal direction, where grid-filled parts represent positions of the inputs to the extrapolation filter and black-filled parts represent positions of outputs of the extrapolation filter. Additionally, in actual implementation, pixels to be predicted on the same diagonal can be predicted in parallel.

(IV) Classification of prediction blocks and selection of transform kernels.

After prediction of the current block, a prediction block of the current block can be obtained. The prediction block includes a prediction value of at least one pixel in the current block. For prediction blocks obtained by different angular modes, different transforms are suitable, which include primary transforms such as MTS and NSPT, and secondary transform LFNST.

MTS includes some traditional transforms, such as DCT and DST. NSPT and LFNST include a series of transform coefficients obtained through a universal training set based on the optimal transform. NSPT and LFNST are different in that NSPT is directly used for transforming residual coefficients, while LFNST further transforms the transform coefficients obtained from DCT2 transform.

For traditional prediction modes (PLANAR mode, DC mode, and angular mode), non-separable primary transform (NSPT) or non-separable secondary transform (low-frequency non-separable transform, LFNST) can perform transformation by matching different traditional prediction modes to different sets of transform kernels according to a mapping such as a look-up table.

In the reference software ECM, as illustrated in FIG. 8, traditional intra prediction modes may include:

(i) PLANAR mode: with an intra prediction mode index of 0;

(ii) DC mode: with an intra prediction mode index of 1;

(iii) Angular modes: with intra prediction mode indices ranging from 2 to 66.

It should also be noted that, as illustrated in FIG. 8, intra prediction modes may include angular modes with indices ranging from 2 to 66, and wide angle modes with indices from -1 to 14 and 67 to 80. Arrow directions in FIG. 8 represent prediction directions of the angular modes present in VVC, and the intra prediction mode indices used for the angular modes during coding range from 2 to 66. When the current block is a non-square block, some angular directions are replaced with wide angle modes (such as -1 to -14 and 67 to 80 in FIG. 8).

In the reference software ECM, for each of NSPT and LFNST, the transform kernels for traditional prediction modes are divided into 35 groups, and each group has 3 selectable transform kernels. Table 2 illustrates correspondence between the traditional prediction modes and the transform kernel groups.

Table 2

| Traditional Intra Modes | PLANAR mode | DC mode | angular directions of -14 to - 1, 67 to 80, 2, and 66 | angular directions of 3 and 65 | angular directions of 4 and 64 | angular directions of 5 and 63 | angular directions of 6 and 62 | angular directions of 7 and 61 | angular directions of 8 and 60 |
|---|---|---|---|---|---|---|---|---|---|
| Group | 0 | 1 | 2 | 3 | 4 | 5 | 6 | 7 | 8 |
| angular directions of 9 and 59 | angular directions of 10 and 58 | angular directions of 11 and 57 | angular directions of 12 and 56 | angular directions of 13 and 55 | angular directions of 14 and 54 | angular directions of 15 and 53 | angular directions of 16 and 52 | angular directions of 17 and 51 | angular directions of 18 and 50 |
| 9 | 10 | 11 | 12 | 13 | 14 | 15 | 16 | 17 | 18 |
| angular directions of 19 and 49 | angular directions of 20 and 48 | angular directions of 21 and 47 | angular directions of 22 and 46 | angular directions of 23 and 45 | angular directions of 24 and 44 | angular directions of 25 and 43 | angular directions of 26 and 42 | angular directions of 27 and 41 | angular directions of 28 and 40 |
| 19 | 20 | 21 | 22 | 23 | 24 | 25 | 26 | 27 | 28 |
| angular directions of 29 and 39 | angular directions of 30 and 38 | angular directions of 31 and 37 | angular directions of 32 and 36 | angular directions of 33 and 35 | angular direction of 34 | | | | |
| 29 | 30 | 31 | 32 | 33 | 34 | | | | |

In a possible embodiment, a method for matching an EIP prediction block to a traditional prediction mode is proposed herein. Then, based on the matched traditional prediction mode, the EIP prediction block is mapped to a different transform kernel of the preset (separable or non-separable) primary transform or (separable or non-separable) secondary transform. Specifically, based on prediction values of the prediction block, the EIP prediction block is matched to the PLANAR mode or an angular mode with a direction from 2 to 66. Specifically, the following steps may be included.

Step 1, a sliding $3\times3$ window is used for calculating gradient values $G_x$ and $G_y$ in a horizontal direction and a vertical direction respectively for each $3\times3$ window in the EIP prediction block. $G_x$ is a dot product of a $3\times3$ horizontal gradient operator $M_x$ and prediction values at positions within the window, and $G_y$ is a dot product of a vertical gradient operator $M_y$ and the prediction values at positions within the window.

$$M_x = \begin{bmatrix} -1 & 0 & 1 \\ -2 & 0 & 2 \\ -1 & 0 & 1 \end{bmatrix} \qquad (3)$$

$$M_y = \begin{bmatrix} -1 & -2 & -1 \\ 0 & 0 & 0 \\ 1 & 2 & 1 \end{bmatrix} \qquad (4)$$

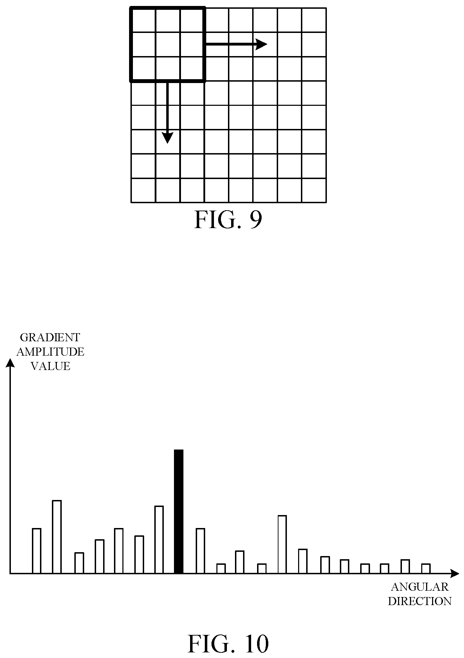

FIG. 9 is a schematic diagram of a sliding $3\times3$ window in a prediction block. The sliding $3\times3$ window can slide along a horizontal direction and a vertical direction. Assuming that the EIP prediction block is a block with width and height dimensions of (w, h), the sliding $3\times3$ window can be used to calculate $G_x$ and $G_y$ at (w-2)$\times$(h-2) positions in the center of the prediction block.

Step 2, according to $G_x$ and $G_y$ at each position, a traditional angular direction O corresponding to each position and the gradient magnitude value $G$ of the angle corresponding to each position are calculated according to the following formulas, specifically:

$$G = |G_x| + |G_y| \qquad (5)$$

$$O = \mathrm{atan}\left(\frac{G_y}{G_x}\right) \qquad (6)$$

In some embodiments, the calculation process of atan () can be simplified by using a look-up table or some variants.

Step 3, the gradient magnitude value $G$ at each position is accumulated onto the traditional angular mode derived for the position to obtain a histogram of gradient magnitude values as illustrated in FIG. 10. Finally, a traditional angular mode with a maximum accumulated gradient magnitude value is selected from the histogram as a prediction mode corresponding to the current block. In particular, when all the gradient magnitude values corresponding to the derived traditional angular modes are zero, a traditional PLANAR mode will be matched as the prediction mode corresponding to the current block.

It should also be noted that, in the embodiments of the disclosure, the traditional prediction mode derived from EIP will be used for selection of a transform kernel set of NSPT and LFNST.

However, after proposed at JVET meeting, the EIP technology has received the feedback indicating that the trade-off between coding performance and encoder complexity needs to be improved. On the latest reference software ECM-8.0, encoding time complexity of the described technology ranges from 108% to 109%.

To this end, embodiments of the disclosure propose an encoding method as follows. A target filtering mode of a current block is determined. A reference region for the current block is determined according to a size parameter of the current block and a size parameter of a target filtering mode. Filter coefficients of the current block are determined according to the reference region for the current block. Intra prediction is performed on the current block according to the filter coefficients to determine a prediction value of the current block.

Embodiments of the disclosure propose a decoding method as follows. A bitstream is decoded to determine a target filtering mode of a current block. A reference region for the current block is determined according to a size parameter of the current block and a size parameter of a target filtering mode. Filter coefficients of the current block are determined according to the reference region for the current block. Intra prediction is performed on the current block according to the filter coefficients to determine a prediction value of the current block.

In this way, candidate filtering models are obtained through different combinations of reference regions and filters, so types of filtering models are expanded. Then, the candidate filtering models are sorted to obtain a filtering-model-candidate list, from which an optimal filtering model can be determined for intra prediction. In this way, intra prediction accuracy and coding performance can be improved.

Embodiments of the disclosure will be described in detail below with reference to the accompanying drawings.

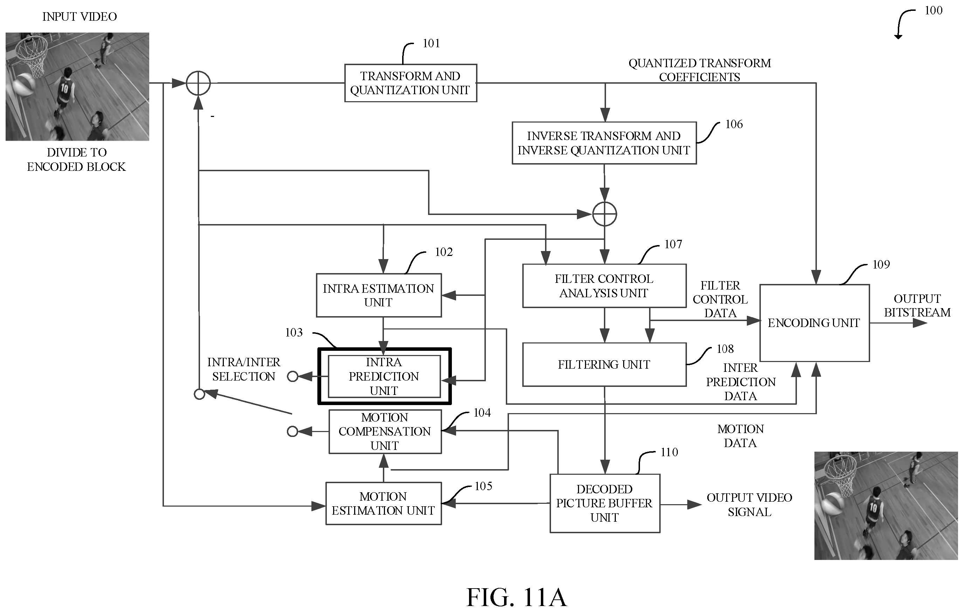

FIG. 11A illustrates a schematic block diagram of composition of an encoder provided in embodiments of the disclosure. As illustrated in FIG. 11A, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded picture buffer unit 110, and the like. The filtering unit 108 can implement deblocking filtering and sample adaptive offset (SAO) filtering. The encoding unit 109 can implement header information encoding and context-based adaptive binary arithmetic coding (CABAC). For an original input video signal, a video coding block can be obtained through coding tree unit (CTU) partitioning. Then, the transform and quantization unit 101 transforms the video coding block by transforming residual pixel information obtained after intra or inter prediction, which includes transforming the residual information from a pixel domain to a transform domain, and quantizes obtained transform coefficients to further reduce the bit rate. The intra estimation unit 102 and the intra prediction unit 103 are used for performing intra prediction on the video coding block. Specifically, the intra estimation unit 102 and the intra prediction unit 103 are used for determining an intra prediction mode for encoding the video coding block. The motion compensation unit 104 and the motion estimation unit 105 are used for performing inter prediction encoding on the received video coding block relative to one or more blocks in one or more reference frames to provide temporal prediction information. Motion estimation performed by the motion estimation unit 105 is a process of generating a motion vector(s), which can estimate motion of the video coding block. Then, the motion compensation unit 104 performs motion compensation based on the motion vector(s) determined by the motion estimation unit 105. After determining the intra prediction mode, the intra prediction unit 103 is also used for providing selected intra prediction data to the encoding unit 109. The motion estimation unit 105 also sends calculated and determined motion vector data to the encoding unit 109. In addition, the inverse transform and inverse quantization unit 106 is used for reconstruction of the video coding block, in which a residual block is reconstructed in the pixel domain and fed into the filter control analysis unit 107 and the filtering unit 108 for removing blocking artifacts, and then added to a predictive block in a picture in the decoded picture buffer unit 110 to generate a reconstructed video coding block. The encoding unit 109 is used for encoding various encoding parameters and quantized transform coefficients. In a CABAC-based encoding algorithm, context can be based on neighboring coding blocks. The encoding unit 109 can be used for encoding information indicating the determined intra prediction mode, and outputting a bitstream of the video signal. The decoded picture buffer unit 110 is used for storing the reconstructed video coding block for prediction reference. As video picture encoding progresses, new reconstructed video coding blocks are continuously generated, and all the reconstructed video coding blocks are stored in the decoded picture buffer unit 110.

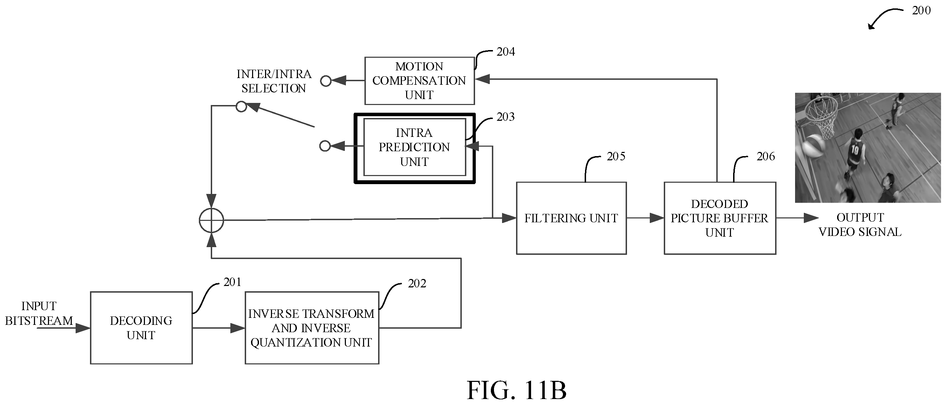

FIG. 11B illustrates a schematic block diagram of composition of a decoder provided in embodiments of the disclosure. As illustrated in FIG. 11B, the decoder (specifically, a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 can implement header information decoding and CABAC decoding, and the filtering unit 205 can implement deblocking filtering and SAO filtering. The encoding processing illustrated in FIG. 11A encodes an input video signal and outputs a bitstream of the video signal. The bitstream is input into the decoder 200 and firstly fed to the decoding unit 201 to obtain decoded transform coefficients. The inverse transform and inverse quantization unit 202 processes the transform coefficients to generate a residual block in the pixel domain. The intra prediction unit 203 can be used for generating prediction data of a current video decoding block based on a determined intra prediction mode and data from previously decoded blocks of the current frame or picture. The motion compensation unit 204 determines prediction information for the video decoding block by parsing a motion vector(s) and other associated syntax elements, and uses the prediction information to generate a predictive block of the video decoding block being decoded. A decoded video block is formed by summing the residual block from the inverse transform and inverse quantization unit 202 and the corresponding predictive block generated by the intra prediction unit 203 or the motion compensation unit 204. The filtering unit 205 removes blocking artifacts of the decoded video signal, which can improve video quality. The decoded video block is then stored in the decoded picture buffer unit 206. The decoded picture buffer unit 206 stores reference pictures for subsequent intra prediction or motion compensation. The decoded picture buffer unit 206 is also used for output the video signal, that is, the recovered original video signal is obtained.

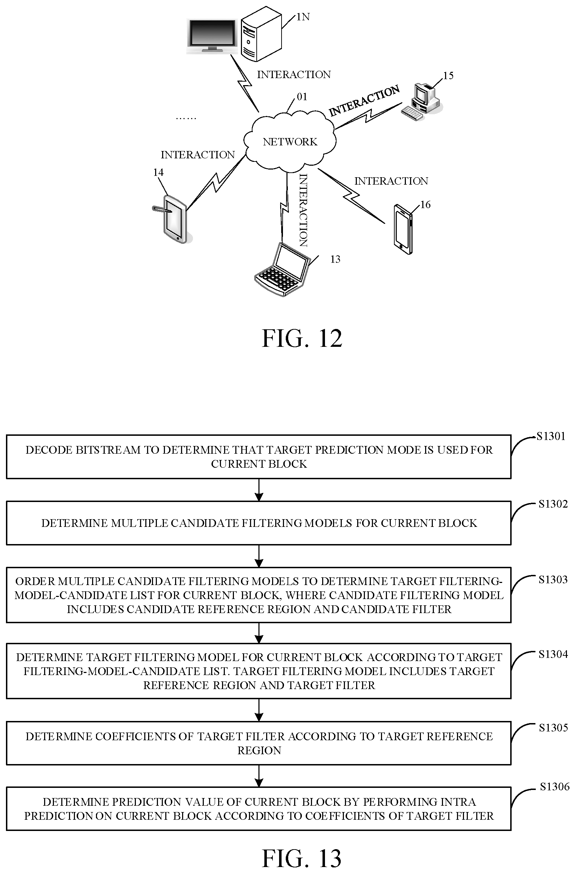

Furthermore, embodiments of the disclosure also provide a network architecture of an encoding and decoding system including an encoder and a decoder. FIG. 12 is a schematic diagram of the network architecture of the encoding and decoding system provided in embodiments of the disclosure. As illustrated in FIG. 12, the network architecture includes one or more electronic devices 13 to 1N and a communication network 01. The electronic devices 13 to 1N can perform video interaction through the communication network 01. During implementation, the electronic devices may be various types of devices with video encoding and decoding functions. For example, the electronic devices may include a smartphone, a tablet computer, a personal computer, a personal digital assistant, a navigator, a digital phone, a video phone, a television, a sensing device, and a server, etc., which is not specifically limited in the embodiments of the disclosure. Herein, the decoder or encoder described in the embodiments of the disclosure may be the above-mentioned electronic devices.

It should be noted that the method of the embodiments of the disclosure is mainly applied to the intra prediction unit 103 illustrated in FIG. 11A and the intra prediction unit 203 illustrated in FIG. 11B. That is to say, the embodiments of the disclosure can be applied to an encoder, can also be applied to a decoder, or can be applied to both the encoder and the decoder. The embodiments of the disclosure are not specifically limited in this regard.

It should also be noted that when applied to the intra prediction unit 103, the "current block" specifically refers to an encoding block to be intra predicted currently. When applied to the intra prediction unit 203, the "current block" specifically refers to a decoding block to be intra predicted currently. In the embodiments of the disclosure, the current block includes at least a first colour component and a second colour component. For the first colour component of the current block, the block in this case may be referred to as a first colour component block for short. When the first colour component is a luma component, the first colour component block may be referred to as a luma block. Similarly, for the second colour component of the current block, the block in this case may be referred to as a second colour component block for short; and when the second colour component is a chroma component, the second colour component block may be referred to as a chroma block.

To facilitate the understanding of the technical solution of the embodiments of the disclosure, the technical solution of the disclosure is described in detail below through specific embodiments. The above related technologies, as optional solutions, can be combined arbitrarily with the technical solution of the embodiments of the disclosure, and all of them are covered by the scope of protection of the present disclosure. The embodiments of the disclosure include at least part of the following content.

In an embodiment of the disclosure, FIG. 13 illustrates a schematic flowchart of a decoding method provided in embodiments of the disclosure. As illustrated in FIG. 13, the method may include the following.

S1301, a bitstream is decoded to determine that a target prediction mode is used for a current block.

It should be noted that the target prediction mode in the embodiments of the disclosure is an intra prediction mode, and specifically may be a prediction mode for intra prediction based on a target filtering model. The target filtering model in the embodiments of the disclosure is determined by sorting candidate filtering models. In some embodiments, the target prediction mode may refer to an improvement based on the extrapolation filter prediction mode. More specifically, the target prediction mode may also be an intra prediction mode based on the convolutional cross-component intra prediction model (CCCM), or an intra prediction mode based on the generalized linear model (GLM), etc.

In some embodiments, the method may include the following. The bitstream is decoded to determine prediction mode indication information of the current block. The indication information is used for indicating whether the target prediction mode is used for the current block.

The prediction mode indication information may include a block-level syntax element for indicating whether the target prediction mode is used for the current block. When it is determined that the target prediction mode is selected for the current block, the decoding method of any one of the embodiments of the disclosure is executed. Otherwise, the method is not executed.

S1302, multiple candidate filtering models for the current block are determined.

It should be noted that if it is determined that the target prediction mode is used for the current block, the multiple candidate filtering models for the current block are further determined. Each of the multiple candidate filtering models includes one type of candidate reference region and one type of candidate filter. Specifically, the candidate filtering model may refer to a filtering model using the candidate reference region and the candidate filter to perform intra prediction on the current block. Specifically, the multiple candidate filtering models may include two or more candidate filtering models.

In some embodiments, the multiple candidate filtering models for the current block are determined as follows. At least one type of candidate reference region for the current block and at least one type of candidate filter for the current block are determined. The multiple candidate filtering models for the current block are determined according to the at least one type of candidate reference region and the at least one type of candidate filter.

In some embodiments, if one type of filter and $B$ types of reconstructed regions are used, at most $1 \times B = B$ types of filtering models can be obtained for each block to be predicted. By simplifying types of filters and expanding types of reconstructed regions for calculating filter coefficients, the prediction accuracy can be improved.

In some other implementations, if $A$ types of filters and $B$ types of reconstructed regions are used, at most $A \times B$ types of filtering models can be obtained. On a basis of expanding the types of reconstructed regions for calculating filter coefficients, appropriately increasing the types of filters can further improve the prediction accuracy.

In some embodiments, the at least one type of candidate reference region for the current block is determined as follows. The at least one type of candidate reference region is determined by performing a combination according to at least one reference sub-region that is reconstructed (or referred to as reconstructed reference sub-region) for the current block. The at least one reference sub-region includes at least one of the following: an upper neighboring region for the current block, a left neighboring region for the current block, and an upper-left neighboring region for the current block.

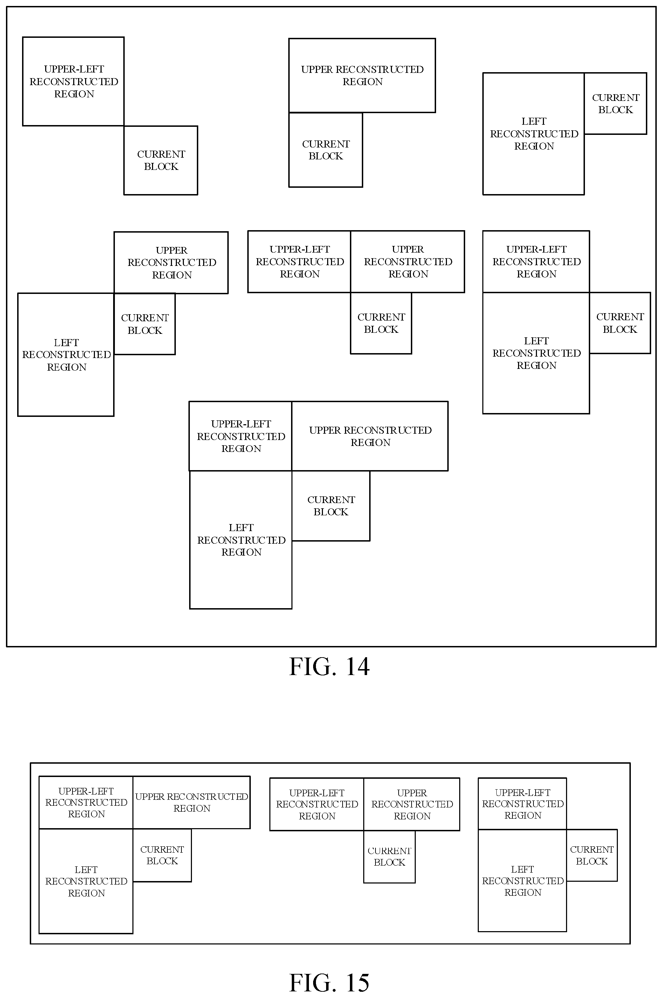

As illustrated in FIG. 14, for a current block (also referred to as a "block to be predicted"), combination among three reconstructed reference sub-regions (including an upper reconstructed region, a left reconstructed region, and an upper-left reconstructed region) can obtain at most 7 reference regions. When the 7 combinations are used, for a given filter, 1×7 types of filtering models can be obtained, and each reconstructed region in different combinations can derive filter coefficients corresponding to the given filter shape. In some embodiments, the given filter may be a 4×4 filter.

In some embodiments, the at least one type of candidate reference region is determined by performing the combination according to the at least one reconstructed reference sub-region for the current block as follows. A second candidate reference region is determined according to the reconstructed upper neighboring region and the reconstructed upper-left neighboring region for the current block. A third candidate reference region is determined according to the reconstructed left neighboring region and the reconstructed upper-left neighboring region for the current block. A fourth candidate reference region is determined according to the reconstructed upper neighboring region, the reconstructed left neighboring region, and the reconstructed upper-left neighboring region for the current block. As illustrated in FIG. 15, 3 types of reconstructed regions can be used for obtaining 3 types of filtering models.

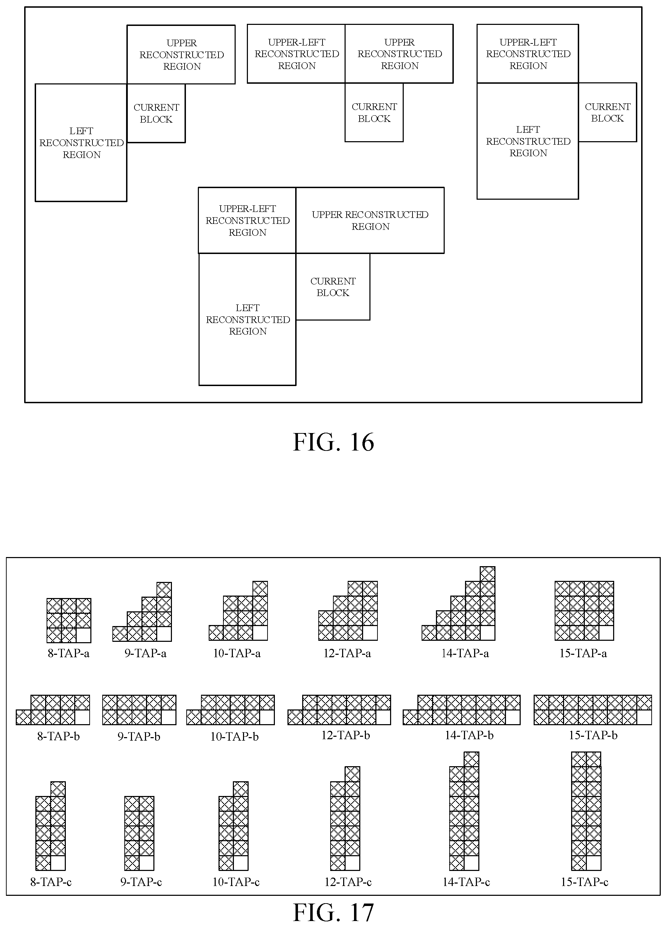

In some embodiments, at least one type of candidate reference region is determined by performing the combination according to the at least one reconstructed reference sub-region for the current block as follows. A first-type candidate reference region is determined according to the reconstructed upper neighboring region and the reconstructed left neighboring region for the current block. A second-type candidate reference region is determined according to the reconstructed upper neighboring region and the reconstructed upper-left neighboring region for the current block. A third-type candidate reference region is determined according to the reconstructed left neighboring region and the reconstructed upper-left neighboring region for the current block. A fourth-type candidate reference region is determined according to the reconstructed upper neighboring region, the reconstructed left neighboring region, and the reconstructed upper-left neighboring region for the current block. As illustrated in FIG. 16, 4 types of reconstructed regions can be used for obtaining 4 types of filtering models.

In some embodiments, the at least one type of candidate filter is determined for the current block as follows. At least one type of candidate filter is determined according to at least one candidate filter shape and a specific tap number.

As illustrated in FIG. 17, examples of candidate filters with 3 filter shapes and different tap numbers are provided. Grid-filled boxes represent inputs of the filter, and a blank-filled box represents an output of the filter.

In some embodiments, the method further includes the following. A size parameter of the candidate reference region is determined according to a size parameter of the current block and a size parameter of the candidate filter. The size parameter includes a height and/or a width. Exemplarily, a minimum parameter is determined from a height and a width of the current block. A height of the candidate reference region is determined according to the minimum parameter and a height of the candidate filter, and a width of the candidate reference region is determined according to the minimum parameter and the width of the candidate filter. More specifically, a width of a left reference region and an upper-left reference region is min(blockWidth, blockHeight) + filterWidth - 1. A height of an upper reference region and the upper-left reference region is min(blockWidth, blockHeight) + filterHeight - 1. Table 3 illustrates values of filterWidth - 1 and filterHeight - 1 for each tap filter.

Table 3

| Tap Numbers | 2 | 3 | 5 | 7 | 8 | 9 | 10 | 12 | 14 | 15 |
|---|---|---|---|---|---|---|---|---|---|---|
| filterWidth-1 | 1 | 1 | 2 | 2 | 3 | 3 | 3 | 3 | 4 | 3 |
| filterHeight-1 | 1 | 1 | 2 | 2 | 3 | 3 | 3 | 3 | 4 | 3 |

In the embodiments of the disclosure, the size of the reference region for the current block is associated with the shape of the filter and the minimum parameter. Briefly, if the current block has a larger size, a larger reference region can be used. If the current block has a smaller size, a smaller reference region can be used. The number of rows and columns of the reference region can be derived according to the size of the current block. Exemplarily, as illustrated in FIG. 4A, FIG. 5A, and FIG. 6A, an L-shaped reconstructed region on the upper-left of the current block is the reference region, and a width and a height of the reference region depend on the size of the filter used for the current block and a value of variable $N$. The value of variable $N$ is equal to the smaller one of a width and a height of the current block. For example, for a 2×8 current block, the value of variable $N$ is 2. For a 4×4 current block, the value of variable $N$ is 4.

S1303, the multiple candidate filtering models are ordered to determine a target filtering-model-candidate list for the current block. The candidate filtering model includes a candidate reference region and a candidate filter.

In some embodiments, the ordering may be performed based on the number of samples in the candidate reference region of each candidate filtering model. The models are added to the candidate list in an order of the number of samples. A candidate filtering model with more samples is added first and a candidate filtering model with less samples is added later. It should be noted that when determining filter coefficients based on the candidate reference region, both the input and output of the candidate filter are reference samples in the candidate reference region, the number of samples may refer to the number of output samples of the candidate filter in the candidate reference region. Generally, more samples result in higher prediction accuracy. Therefore, the ordering based on the number of samples can be understood as ordering the candidate filtering models by prediction accuracy.

Exemplarily, the multiple candidate filtering models are ordered to determine the target filtering-model-candidate list for the current block as follows. A first candidate reference region and a first candidate filter of a first candidate filtering model are determined among the multiple candidate filtering models. Taking reference samples in the first candidate reference region as input samples of the first candidate filter, the number of output samples of the first candidate filter in the first candidate reference region is determined. The first candidate filtering models are ordered according to the number of samples in the first candidate reference region to obtain a first filtering-model-candidate list. The target filtering-model-candidate list is obtained according to the first filtering-model-candidate list. As illustrated in FIG. 4A, when a 4×4 filter slides in an L-shaped reconstructed region and reference samples of the L-shaped reconstructed region are used as input samples of the filter, the number of output samples in the L-shaped reconstructed region is the number of samples in the dashed region of the L-shaped reconstructed region adjacent to the current block. Grid-filled parts represent positions of the input samples of the filter, and the blank-filled part represents a position of the output sample of the filter.

In some embodiments, the ordering of the multiple candidate filtering models to determine the target filtering-model-candidate list for the current block further includes the following. Coefficients of the first candidate filter are determined according to the first candidate reference region. In a process of ordering the first candidate filtering models according to the number of samples in the first candidate reference region, the first candidate filtering model with duplicate coefficients of the first candidate filter are deleted to obtain the first filtering-model-candidate list.

It should be noted that when constructing the filtering-model-candidate list, since different models may correspond to the same filter coefficients, deduplication should be performed on the models to remove a redundant model(s), so as to improve intra prediction efficiency. If $A$ types of filters and $B$ types of reconstructed regions are used, at most $A \times B$ types of filtering models can be obtained. Considering that there may be models with identical filter coefficients, the number of filtering models after deduplication shall be less than or equal to $A \times B$ in some cases.

In some embodiments, the first filtering-model-candidate list is directly used as the target filtering-model-candidate list. In other embodiments, the target filtering-model-candidate list is obtained according to the first filtering-model-candidate list as follows. The first filtering-model-candidate list is reordered based on template matching to obtain the target filtering-model-candidate list. That is, the candidate filtering models are used for performing prediction on a template of the current block. Matching degrees between prediction values and reconstructed values of the template of the current block are compared to reorder the candidate filtering models. The target filtering model is determined according to the reordering result. By reordering the candidate filtering models and determining the target filtering model based on the reordering result, the prediction accuracy can be improved. Furthermore, if an index value of the target filtering model is encoded, the number of encoded binary symbols can be reduced.

Exemplarily, the first filtering-model-candidate list is reordered based on the template matching to obtain the target filtering-model-candidate list as follows. A second candidate reference region and a second candidate filter of a second candidate filtering model in the first filtering-model-candidate list are determined. Coefficients of the second candidate filter are determined according to the second candidate reference region. Prediction is performed on the template of the current block according to the coefficients of the second candidate filter to obtain a prediction value of the template of the current block. Cost calculation is performed according to the prediction value and a reconstructed value of the template of the current block to obtain a first cost parameter. The first filtering-model-candidate list is reordered according to the first cost parameter to obtain the target filtering-model-candidate list. In the embodiments of the disclosure, a cost function used for the cost calculation may be a SAD, a sum of absolute transformed differences (SATD), a MSE, a sum of squared differences (SSD), a mean absolute difference (MAD), a mean squared difference (MSD), an absolute value of a discrete cosine transform (DCT), a normalized cross-correlation coefficient (NCC), etc., which are not specifically limited herein.

It should be noted that the template may be composed of reconstructed pixels from one or more of the following regions for the current block: an upper region, an upper-right region, a left region, a lower-left region, and an upper-left region. In addition, an $N$-row and $M$-column template region may be used, where $N$ and $M$ are positive integers related to the shape and size of the current block. $N$ and $M$ may also be preset.

It should also be noted that, which part of the reconstructed pixels to obtain may be determined according to a value of a template type parameter (refTemplateType). Exemplarily, when the value of refTemplateType is 1, reconstructed pixels from the left, the upper-left, and the upper of the current block are obtained. Alternatively, when the value of refTemplateType is 2, only reconstructed pixels from four left columns of the current block are obtained. Alternatively, when the value of refTemplateType is 3, only reconstructed pixels from four upper rows of the current block are obtained.

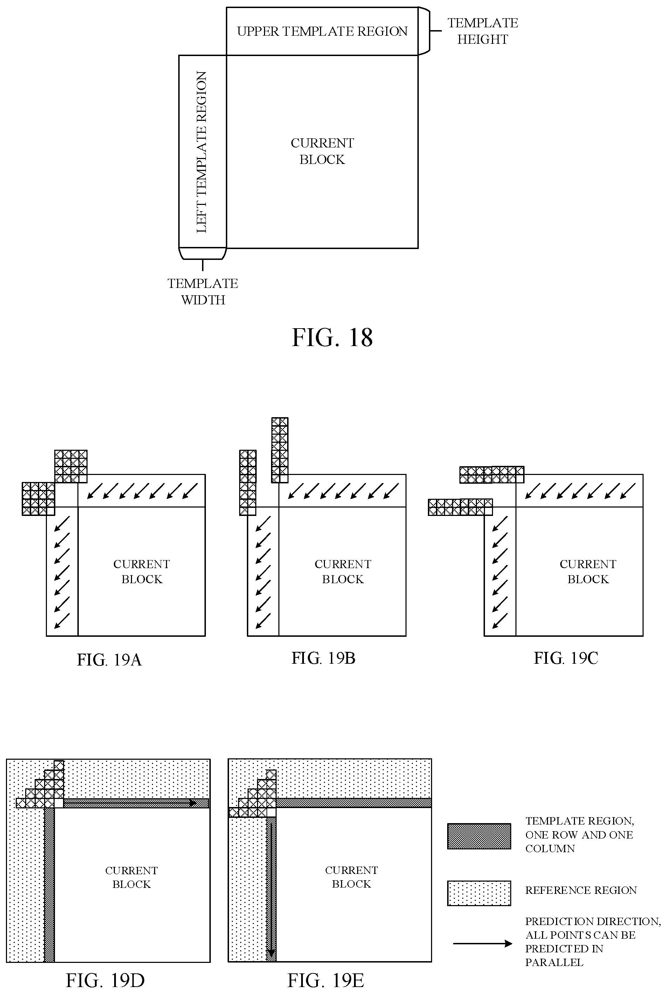

Each model in the candidate list is used one by one to perform prediction on the template region for the current block. The prediction may be performed in a predefined direction, e.g., a diagonal direction, a horizontal direction, or a vertical direction, etc. Exemplarily, as illustrated in FIG. 18, the template region for the current block includes an upper template region and a left template region, with both a width and a height of the template region greater than 1 pixel. As illustrated in FIG. 19A, a 4×4 candidate filter is used for performing prediction on the upper template region and the left template region separately in the diagonal direction. As illustrated in FIG. 19B, an 8×2 candidate filter is used for performing prediction on the upper template region and the left template region separately in the diagonal direction. As illustrated in FIG. 19C, a 2×8 candidate filter is used for performing prediction on the upper template region and the left template region separately in the diagonal direction.

Exemplarily, the template region for the current block includes the upper template region, the left template region, and an upper-left template region, with both the width and height of the template region equal to 1 pixel. As illustrated in FIG. 19D, a filter moves in the horizontal direction when performing prediction on the upper template region. As illustrated in FIG. 19E, the filter moves in the vertical direction when performing prediction on the left template region.

In some embodiments, a calculation method for generating prediction values on the template is specifically as follows. A prediction value of a first template sample in the template of the current block is determined according to the coefficients of the second candidate filter and reconstructed values of reference samples in the second candidate reference region. A prediction value of a second template sample in the template of the current block is determined according to the coefficients of the second candidate filter, the reconstructed values of the reference samples in the second candidate reference region, and prediction values of predicted template samples. The predicted template samples include the first template sample and/or the second template sample.

It should be noted that the prediction method for the template may be the same as the prediction method for the current block. That is, when performing prediction on a non-upper-left position(s) of the left template and the upper template, the prediction value(s) of the template is used as a part of the inputs of the filters. This method advantageously better generates prediction values of the model on the template region. However, similar to prediction of the block to be predicted, since some prediction values need to be used as the inputs of the filter, there will be dependencies between pixels. For example, if prediction is performed in a diagonal order, the prediction of pixel values on the current diagonal requires prediction values of a previous diagonal, i.e., there is diagonal dependency.

In other embodiments, the calculation method for generating prediction values on the template is specifically as follows. The prediction value of the template of the current block is obtained according to the coefficients of the second candidate filter and the reconstructed values of reference samples in the second candidate reference region.

It should be noted that since the template region has been fully reconstructed, all inputs of the filter can be reconstructed pixel values. This method may result in lower accuracy of template matching in some cases, as the method differs from the prediction method for the block to be predicted. However, the method has an advantage of good parallelization. That is, all positions on the template can be calculated in parallel and computational efficiency is high.

In some embodiments, the method further includes the following. The bitstream is decoded to determine reordering indication information. The first filtering-model-candidate list is reordered based on the template matching to obtain the target filtering-model-candidate list when the reordering indication information indicates that the template matching is used to reorder the filtering-model-candidate list for the current block. The first filtering-model-candidate list is used as the target filtering-model-candidate list when the reordering indication information indicates that template matching technology is not used to reorder the filtering-model-candidate list for the current block.

Exemplarily, the reordering indication information includes a first syntax element and a second syntax element. The first syntax element is used for indicating whether the template matching technology is allowed for the current block. The second syntax element is used for indicating whether the template matching is used for reordering the filtering-model-candidate list for the current block.

The bitstream is decoded to determine the reordering indication information as follows. The bitstream is decoded to determine a value of the first syntax element. The bitstream is decoded to determine a value of the second syntax element when the value of the first syntax element is a first value. It is determined that the template matching is used to reorder the filtering-model-candidate list for the current block when the value of the second syntax element is the first value. It is determined that the template matching technology is not used to reorder the filtering-model-candidate list for the current block when the value of the first syntax element is a second value or the value of the second syntax element is the second value.

It should be noted that enablement of technologies based on template matching is controlled by a unified first syntax element, and this flag may be of a sequence-level, a picture-level, a slice-level, and a coding tree unit-level, etc. The flag controls whether some or all technologies based on the template matching, which include reordering of the filtering-model-candidate list based on the template matching in the embodiments of the disclosure, are allowed. When the unified flag is enabled, further decoding of a flag for each template matching technology is allowed. The reordering of the filtering-model-candidate list based on the template matching herein may also be controlled by the unified flag. The enablement of the reordering of the filtering-model-candidate list based on the template matching may be controlled by the second syntax element, and this flag may be of a sequence-level, a picture-level, a slice-level, and a coding tree unit-level, etc.

S1304, a target filtering model for the current block is determined according to the target filtering-model-candidate list. The target filtering model includes a target reference region and a target filter.

In some embodiments, the target filtering model for the current block is determined according to the target filtering-model-candidate list as follows. The first filtering model in the target filtering-model-candidate list is obtained as the target filtering model. That is, a filtering model ranked first in the target filtering-model-candidate list (whether reordered or not) is obtained as the target filtering model.

In other embodiments, the method further includes the following. The bitstream is decoded to determine an index value of the target filtering model. The target filtering model for the current block is determined according to the target filtering-model-candidate list as follows. The target filtering model for the current block is determined according to the index value of the target filtering model and the target filtering-model-candidate list. In some embodiments, the index value is used for determining the target filtering model among first $M$ candidate filtering models in the target filtering-model-candidate list. In some embodiments, $M$ is less than the total number of models in the target candidate list.

Exemplarily, the bitstream is decoded to determine the index value of the target filtering model as follows. The bitstream is decoded to determine $N$ binary symbols indicating the index value of the target filtering model, where $N$ is an integer. The index value of the target filtering model is determined according to the $N$ binary symbols. In some embodiments, an index reference value is determined according to the $N$ binary symbols, and the index value is determined according to the index reference value. In other embodiments, the index value is determined directly according to the $N$ binary symbols.

Furthermore, in some embodiments, the encoding method for binarization of the index value may be one of the following: truncated unary coding, truncated binary coding, or truncated Golomb-Rice coding. Each binary symbol may be decoded using a context model or with equal probability.

Furthermore, taking an example of the target filtering-model-candidate list including 4 candidate filtering models, the representation and meaning of each model index is illustrated below.

Table 4-1 Un-Reordered Candidate List

| Binary Symbol Representation | Index Value in Filtering-model-candidate list | Model indicated |
|---|---|---|
| 0 | 0 | a model with the most samples obtained from the reconstructed region |
| 10 | 1 | a model with the second most samples obtained from the reconstructed region |
| 110 | 2 | a model with the third most samples obtained from the reconstructed region |
| 111 | 3 | a model with the fourth most samples obtained from the reconstructed region |

Table 4-2 Reordered Candidate List

| Binary Symbol Representation | Index Value in Filtering-model-candidate list | Model indicated |
|---|---|---|
| 0 | 0 | a model with the smallest template cost |
| 10 | 1 | a model with the second smallest template cost |
| 110 | 2 | a model with the third smallest template cost |
| 111 | 3 | a model with the fourth smallest template cost |

The binary symbols in Table 4-1 and Table 4-2 are coded with the truncated unary coding, where each binary symbol may be coded using a context model or with equal probability.

Table 5-1 Un-Reordered Candidate List

| Binary Symbol Representation | Index Value in Filtering-Model-Candidate List | Model Indicated |
|---|---|---|
| 00 | 0 | a model with the most samples obtained from the reconstructed region |

(continued)

| Binary Symbol Representation | Index Value in Filtering-Model-Candidate List | Model Indicated |
|---|---|---|
| 01 | 1 | a model with the second most samples obtained from the reconstructed region |
| 10 | 2 | a model with the third most samples obtained from the reconstructed region |
| 11 | 3 | a model with the fourth most samples obtained from the reconstructed region |

Table 5-2 Reordered Candidate List

| Binary Symbol Representation | Index Value in Filtering-Model-Candidate List | Model Indicated |
|---|---|---|
| 00 | 0 | a model with the smallest template cost |
| 01 | 1 | a model with the second smallest template cost |
| 10 | 2 | a model with the third smallest template cost |
| 11 | 3 | a model with the fourth smallest template cost |

The binary symbols in Table 5-1 and Table 5-2 are coded with the truncated binary coding, where each binary symbol may be coded using a context model or with equal probability.

Table 6-1 Un-Reordered Candidate List

| Prefix Binary Symbol (prefix) | Suffix Binary Symbol (suffix) | Index Value in Filtering-Model-Candidate List | Model Indicated |
|---|---|---|---|
| 0 | 0 | 0 | a model with the most samples obtained from the reconstructed region |
| 0 | 1 | 1 | a model with the second most samples obtained from the reconstructed region |
| 1 | 0 | 2 | a model with the third most samples obtained from the reconstructed region |
| 1 | 1 | 3 | a model with the fourth most samples obtained from the reconstructed region |

Table 6-2 Reordered Candidate List

| Prefix Binary Symbol (prefix) | Suffix Binary Symbol (suffix) | Index Value in Filtering-Model-Candidate List | Model Indicated |
|---|---|---|---|
| 0 | 0 | 0 | a model with the smallest template cost |
| 0 | 1 | 1 | a model with the second smallest template cost |
| 1 | 0 | 2 | a model with the third smallest template cost |
| 1 | 1 | 3 | a model with the fourth smallest template cost |

The binary symbols in Table 6-1 and Table 6-2 are coded with the truncated Golomb-Rice coding, where each binary symbol may be coded using a context model or with equal probability.

S1305, coefficients of the target filter are determined according to the target reference region.

In some embodiments, a method for determining coefficients of a filter (including a candidate filter and the target filter) may include the following. At least one reference sub-region in a current reference region is determined. The current reference region is the target reference region, a first candidate reference region, or a second candidate reference region. An autocorrelation coefficient matrix and a cross-correlation coefficient vector of each of the at least one reference sub-region are obtained. Coefficients of the current filter are determined according to the autocorrelation coefficient matrix and the cross-correlation coefficient vector of each of the at least one reference sub-region.

In some embodiments, the method further includes the following. Multiple reference sub-regions for the current block are determined, where the multiple reference sub-regions do not overlap. An autocorrelation coefficient matrix and a cross-correlation coefficient vector of each of the multiple reference sub-regions are obtained according to the multiple reference sub-regions and the candidate filters. The autocorrelation coefficient matrix and the cross-correlation coefficient vector of each of the multiple reference sub-regions are stored into a preset buffer. The autocorrelation coefficient matrix and the cross-correlation coefficient vector of each of the at least one reference sub-region are obtained as follows. The autocorrelation coefficient matrix and the cross-correlation coefficient vector of each of the at least one reference sub-region are obtained from the preset buffer.

Exemplarily, each reference region illustrated in FIG. 16 is composed of any of three reference sub-regions, i.e., an upper reference sub-region, a left reference sub-region, and an upper-left reference sub-region. Therefore, after obtaining an autocorrelation coefficient matrix and a cross-correlation coefficient vector of each of the upper reference sub-regions, the left reference sub-regions, and the upper-left reference sub-regions, an autocorrelation coefficient matrix and a cross-correlation coefficient vector of the complete reference region can be obtained through combination of any two or more reference sub-regions, so as to further solve for the filter coefficients. In the embodiments of the disclosure, after deriving the filter coefficients according to the combination of current reference sub-regions, each time when an unconstructed reference sub-region is encountered, an autocorrelation coefficient matrix and a cross-correlation coefficient vector of the unconstructed reference sub-region need to be stored for subsequent use for other combinations. Thus, subsequent computational complexity can be reduced.

S1306, intra prediction is performed on the current block according to the coefficients of the target filter to determine a prediction value of the current block.

In some embodiments, intra prediction is performed on the current block according to the coefficients of the target filter to determine the prediction value of the current block as follows. For a pixel to be predicted in the current block, a reconstructed value of a reference sample in the target reference region is determined. A prediction value of the pixel to be predicted in the current block is determined according to the coefficients of the target filter and the reconstructed value of the reference sample. It should be noted that, in order to reduce computational complexity, the embodiments of the disclosure may adopt the prediction method illustrated in formula (2) to determine the prediction value.

In other embodiments, a prediction method of subtracting a mean value from input samples and output samples may also be used. Also, a prediction method of finding a maximum value and a minimum value in the reference region to restrict a range of prediction values may also be used.

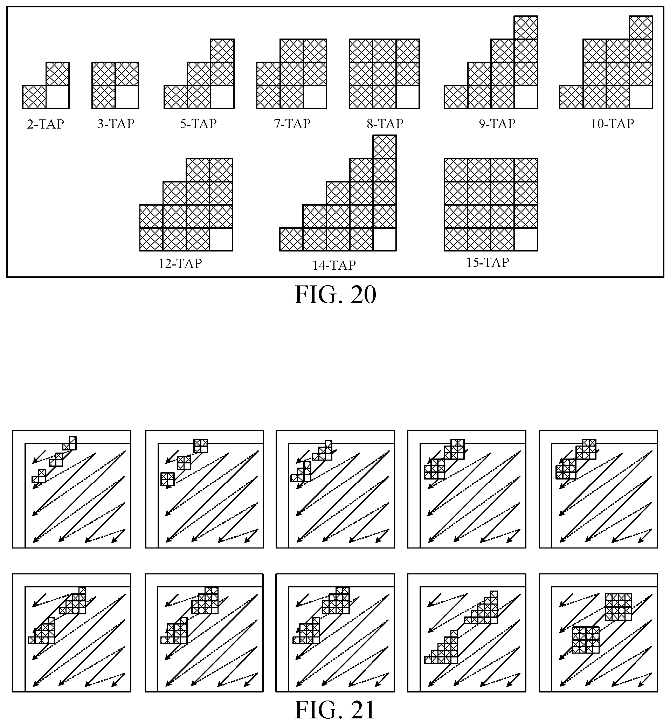

FIG. 20 illustrates a schematic diagram of filters corresponding to different tap numbers in the embodiments of the disclosure. As illustrated in FIG. 20, 10 types of filters corresponding to 10 tap numbers are provided.

FIG. 21 illustrates a schematic diagram of prediction directions of different filters in FIG. 20. As illustrated in FIG. 20, a filter performs prediction in a diagonal direction, where grid-filled parts represent positions of inputs of the filter and blank-filled parts represent positions of outputs of the filter. Additionally, in implementation, pixels to be predicted on a same diagonal can be predicted in parallel.

By adopting the above technical solution, candidate filtering models are obtained through different combinations of reference regions and filters, so types of filtering models are expanded. Then the candidate filtering models are ordered to obtain a filtering-model-candidate list, and an optimal filtering model can be determined for intra prediction. In this way, intra prediction accuracy and coding performance can be improved.

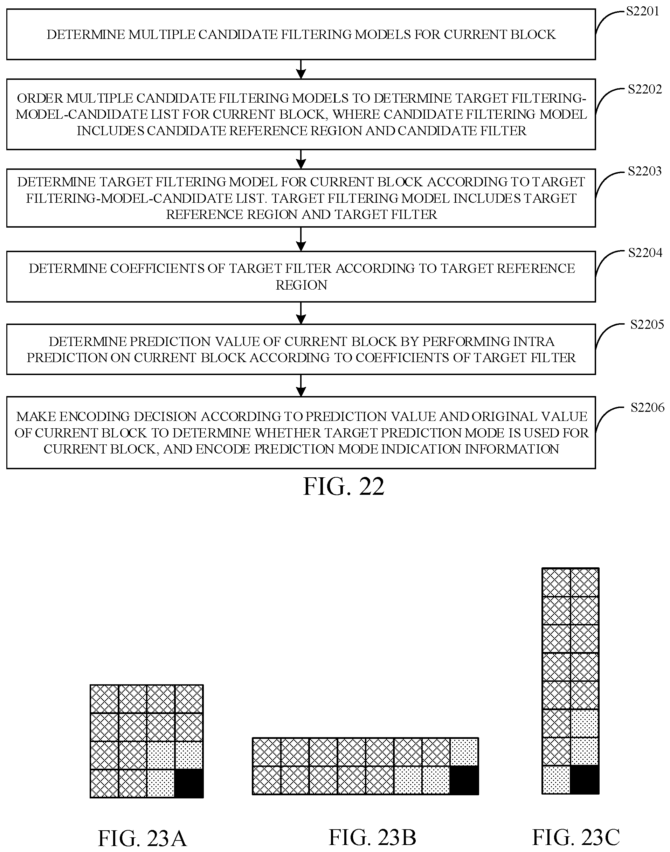

In another embodiment of the disclosure, FIG. 22 illustrates a schematic flowchart of an encoding method provided in embodiments of the disclosure. As illustrated in FIG. 22, the method may include the following.

S2201, multiple candidate filtering models for the current block are determined.

It should be noted that if it is determined by encoding end that the target prediction mode is allowed to be used for the current block, the multiple candidate filtering models for the current block are further determined. Each of the multiple candidate filtering models includes one type of candidate reference region and one type of candidate filter. Specifically, the candidate filtering model may refer to a filtering model using a candidate reference region and a candidate filter to perform intra prediction on the current block. Specifically, the multiple candidate filtering models may include two or more candidate filtering models.

In some embodiments, the multiple candidate filtering models for the current block are determined as follows. At least one type of candidate reference region for the current block and at least one type of candidate filter for the current block are determined. The multiple candidate filtering models for the current block are determined according to the at least one type of candidate reference region and the at least one type of candidate filter.

In some embodiments, if one type of filter and B types of reconstructed regions are used, at most $1 \times B = B$ types of filtering models can be obtained for each block to be predicted. By simplifying types of filters and expanding types of reconstructed regions for calculating filter coefficients, the prediction accuracy can be improved.

In some other implementations, if A types of filters and B types of reconstructed regions are used, at most $A \times B$

types of filtering models can be obtained. On a basis of expanding the types of reconstructed regions for calculating filter coefficients, appropriately increasing the types of filters can further improve the prediction accuracy.

In some embodiments, at least one type of candidate reference region for the current block is determined as follows. The at least one type of candidate reference region is determined by performing a combination according to at least one reference sub-region that is reconstructed (or referred to as reconstructed reference sub-region) for the current block. The at least one reference sub-region includes at least one of the following: an upper neighboring region for the current block, a left neighboring region for the current block, and an upper-left neighboring region for the current block.

As illustrated in FIG. 14, for a current block, combination among three reconstructed reference sub-regions (including an upper reconstructed region, a left reconstructed region, and an upper-left reconstructed region) can obtain at most 7 reference regions. When the 7 combinations are used, for a given filter, $1 \times 7$ types of filtering models can be obtained, and each reconstructed region in different combinations can derive filter coefficients corresponding to the given filter shape. In some embodiments, the given filter may be a $4 \times 4$ filter.

In some embodiments, at least one type of candidate reference region is determined by performing the combination according to the at least one reconstructed reference sub-region for the current block as follows. A second candidate reference region is determined according to the reconstructed upper neighboring region and the reconstructed upper-left neighboring region for the current block. A third candidate reference region is determined according to the reconstructed left neighboring region and the reconstructed upper-left neighboring region for the current block. A fourth candidate reference region is determined according to the reconstructed upper neighboring region, the reconstructed left neighboring region, and the reconstructed upper-left neighboring region for the current block. As illustrated in FIG. 15, 3 types of reconstructed regions can be used for obtaining 3 types of filtering models.

In some embodiments, at least one type of candidate reference region is determined by performing the combination according to the at least one reconstructed reference sub-region for the current block as follows. A first-type candidate reference region is determined according to the reconstructed upper neighboring region and the reconstructed left neighboring region for the current block. A second-type candidate reference region is determined according to the reconstructed upper neighboring region and the reconstructed upper-left neighboring region for the current block. A third-type candidate reference region is determined according to the reconstructed left neighboring region and the reconstructed upper-left neighboring region for the current block. A fourth-type candidate reference region is determined according to the reconstructed upper neighboring region, the reconstructed left neighboring region, and the reconstructed upper-left neighboring region for the current block. As illustrated in FIG. 16, 4 types of reconstructed regions can be used for obtaining 4 types of filtering models.

In some embodiments, the at least one type of candidate filter is determined for the current block as follows. At least one type of candidate filter is determined according to at least one candidate filter shape and a specific tap number.

As illustrated in FIG. 17, examples of candidate filters with 3 filter shapes and different tap numbers are provided. Grid-filled boxes represent inputs of the filter, and a blank-filled box represents an output of the filter.

In some embodiments, the method further includes the following. A size parameter of the candidate reference region is determined according to a size parameter of the current block and a size parameter of the candidate filter. The size parameter includes a height and/or a width. Exemplarily, a minimum parameter is determined from a height and a width of the current block. A height of the candidate reference region is determined according to the minimum parameter and a height of the candidate filter, and a width of the candidate reference region is determined according to the minimum parameter and the width of the candidate filter.

More specifically, a width of a left reference region and an upper-left reference region is min(blockWidth, blockHeight) + filterWidth - 1.

A height of an upper reference region and the upper-left reference region is min(blockWidth, blockHeight) + filterHeight - 1.

Table 3 illustrates values of filterWidth - 1 and filterHeight - 1 for each tap filter.

In the embodiments of the disclosure, the size of the reference region for the current block is associated with the shape of the filter and the minimum parameter. Briefly, if the current block has a larger size, a larger reference region can be used. If the current block has a smaller size, a smaller reference region can be used. The number of rows and columns of the reference region can be derived according to the size of the current block. Exemplarily, as illustrated in FIG. 4A, FIG. 5A, and FIG. 6A, an L-shaped reconstructed region on the upper-left of the current block is the reference region, and a width and a height of the reference region depend on the size of the filter used for the current block and a value of variable N. The value of variable N is equal to the smaller one of a width and a height of the current block. For example, for a $2 \times 8$ current block, the value of variable N is 2. For a $4 \times 4$ current block, the value of variable N is 4.

S2202, the multiple candidate filtering models are ordered to determine a target filtering-model-candidate list for the current block. The candidate filtering model includes a candidate reference region and a candidate filter.

In some embodiments, the ordering may be performed based on the number of samples in the candidate reference region for each candidate filtering model. The models are added to the candidate list in an order of the number of samples. A candidate filtering model with more samples is added first and a candidate filtering model with less samples is added later. It should be noted that when determining filter coefficients based on the candidate reference region, both the input and output of the candidate filter are reference samples in the candidate reference region, the number of samples may refer to the number of output samples of the candidate filter in the candidate reference region. Generally, more samples result in higher prediction accuracy. Therefore, the ordering based on the number of samples can be understood as ordering the candidate filtering models by prediction accuracy.

Exemplarily, the multiple candidate filtering models are ordered to determine the target filtering-model-candidate list for the current block as follows. A first candidate reference region and a first candidate filter of a first candidate filtering model are determined among the multiple candidate filtering models. Taking reference samples in the first candidate reference region as input samples of the first candidate filter, the number of output samples of the first candidate filter in the first candidate reference region is determined. The first candidate filtering models are ordered according to the number of samples in the first candidate reference region to obtain a first filtering-model-candidate list. The target filtering-model-candidate list is obtained according to the first filtering-model-candidate list. As illustrated in FIG. 4A, when a 4×4 filter slides in an L-shaped reconstructed region and reference samples of the L-shaped reconstructed region are used as input samples of the filter, the number of output samples in the L-shaped reconstructed region is the number of samples in the dashed region of the L-shaped reconstructed region adjacent to the current block. Grid-filled parts represent positions of the input samples of the filter, and the blank-filled part represents a position of the output sample of the filter.

In some embodiments, the ordering of the multiple candidate filtering models to determine the target filtering-model-candidate list for the current block further includes the following. Coefficients of the first candidate filter are determined according to the first candidate reference region. In a process of ordering the first candidate filtering models according to the number of samples in the first candidate reference region, first candidate filtering models with duplicate coefficients of the first candidate filter are deleted to obtain the first filtering-model-candidate list.

It should be noted that when constructing the filtering-model-candidate list, since different models may correspond to the same filter coefficients, deduplication should be performed on the models to remove a redundant model(s), so as to improve intra prediction efficiency. If A types of filters and B types of reconstructed regions are used, at most A×B types of filtering models can be obtained. Considering that there may be models with identical filter coefficients, the number of filtering models after deduplication shall be less than or equal to A×B in some cases.

In some embodiments, the first filtering-model-candidate list is directly used as the target filtering-model-candidate list. In other embodiments, the target filtering-model-candidate list is obtained according to the first filtering-model-candidate list as follows. The first filtering-model-candidate list is reordered based on template matching to obtain the target filtering-model-candidate list. That is, the candidate filtering models are used for performing prediction on a template of the current block. Matching degrees between prediction values and reconstructed values of the template of the current block are compared to reorder the candidate filtering models. The target filtering model is determined according to the reordering result. By reordering the candidate filtering models and determining the target filtering model based on the reordering result, the prediction accuracy can be improved. Furthermore, if an index value of the target filtering model is encoded, the number of encoded binary symbols can be reduced.

Exemplarily, the first filtering-model-candidate list is reordered based on the template matching to obtain the target filtering-model-candidate list as follows. A second candidate reference region and a second candidate filter of a second candidate filtering model in the first filtering-model-candidate list are determined. Coefficients of the second candidate filter are determined according to the second candidate reference region. Prediction is performed on the template of the current block according to the coefficients of the second candidate filter to obtain a prediction value of the template of the current block. Cost calculation is performed according to the prediction value and a reconstructed value of the template of the current block to obtain a first cost parameter. The first filtering-model-candidate list is reordered according to the first cost parameter to obtain the target filtering-model-candidate list. In the embodiments of the disclosure, a cost function used for the cost calculation may be a SAD, a sum of absolute transformed differences (SATD), a MSE, a sum of squared differences (SSD), a mean absolute difference (MAD), a mean squared difference (MSD), an absolute value of a discrete cosine transform (DCT), a normalized cross-correlation coefficient (NCC), etc., which are not specifically limited herein.

It should be noted that the template may be composed of reconstructed pixels from one or more of the following regions for the current block: an upper region, an upper-right region, a left region, a lower-left region, and an upper-left region. In addition, an N-row and M-column template region may be used, where N and M are positive integers related to the shape and size of the current block. N and M may also be preset.

It should also be noted that, which part of the reconstructed pixels to obtain may be determined according to a value of a template type parameter (refTemplateType). Exemplarily, when the value of refTemplateType is 1, reconstructed pixels from the left, the upper-left, and the upper of the current block are obtained. Alternatively, when the value of refTemplateType is 2, only reconstructed pixels from four left columns of the current block are obtained. Alternatively, when the value of refTemplateType is 3, only reconstructed pixels from four upper rows of the current block are obtained.

Each model in the candidate list is used one by one to perform prediction on the template region for the current block. The prediction may be performed in a predefined direction, e.g., a diagonal direction, a horizontal direction, or a vertical direction, etc. Exemplarily, as illustrated in FIG. 18, the template region for the current block includes an upper template region and a left template region, with both a width and a height of the template region greater than 1 pixel. As illustrated in FIG. 19A, a $4\times4$ candidate filter is used for performing prediction on the upper template region and the left template region separately in the diagonal direction. As illustrated in FIG. 19B, an $8\times2$ candidate filter is used for performing prediction on the upper template region and the left template region separately in the diagonal direction. As illustrated in FIG. 19C, a $2\times8$ candidate filter is used for performing prediction on the upper template region and the left template region separately in the diagonal direction.

Exemplarily, the template region for the current block includes the upper template region, the left template region, and an upper-left template region, with both the width and height of the template region equal to 1 pixel. As illustrated in FIG. 19D, a filter moves in the horizontal direction when performing prediction on the upper template region. As illustrated in FIG. 19E, the filter moves in the vertical direction when performing prediction on the left template region.

In some embodiments, a calculation method for generating prediction values on the template is specifically as follows. A prediction value of a first template sample in the template of the current block is determined according to the coefficients of the second candidate filter and reconstructed values of reference samples in the second candidate reference region. A prediction value of a second template sample in the template of the current block is determined according to the coefficients of the second candidate filter, the reconstructed values of the reference samples in the second candidate reference region, and prediction values of predicted template samples. The predicted template samples include the first template sample and/or the second template sample.

It should be noted that the prediction method for the template may be the same as the prediction method for the current block. That is, when performing prediction on a non-upper-left position(s) of the left template and the upper template, the prediction value(s) of the template is used as a part of the inputs of the filters. This method advantageously better generates prediction values of the model on the template region. However, similar to prediction of the block to be predicted, since some prediction values need to be used as the inputs of the filter, there will be dependencies between pixels. For example, if prediction is performed in a diagonal order, the prediction of pixel values on the current diagonal requires prediction values of a previous diagonal, i.e., there is diagonal dependency.

In other embodiments, the calculation method for generating prediction values on the template is specifically as follows. The prediction value of the template of the current block is obtained according to the coefficients of the second candidate filter and the reconstructed values of reference samples in the second candidate reference region.

It should be noted that since the template region has been fully reconstructed, all inputs of the filter can be reconstructed pixel values. This method may result in lower accuracy of template matching as the method differs from the prediction method for the block to be predicted. However, the method has an advantage of good parallelization. That is, all positions on the template can be calculated in parallel and computational efficiency is high.

In some embodiments, the method further includes the following. Reordering indication information is determined. The first filtering-model-candidate list is reordered based on the template matching to obtain the target filtering-model-candidate list when the reordering indication information indicates that the template matching is used to reorder the filtering-model-candidate list for the current block. The first filtering-model-candidate list is used as the target filtering-model-candidate list when the reordering indication information indicates that template matching technology is not used to reorder the filtering-model-candidate list for the current block. The reordering indication information is encoded.

Exemplarily, the reordering indication information includes a first syntax element and a second syntax element. The first syntax element is used for indicating whether the template matching technology is allowed for the current block. The second syntax element is used for indicating whether the template matching is used for reordering the filtering-model-candidate list for the current block.

Reordering indication information is determined as follows. The second syntax element is determined when a value of the first syntax element is a first value. It is determined that the template matching is used to reorder the filtering-model-candidate list for the current block when the value of the second syntax element is the first value. It is determined that the template matching technology is not used to reorder the filtering-model-candidate list for the current block when the value of the first syntax element is a second value or the value of the second syntax element is the second value.

It should be noted that enablement of technologies based on template matching is controlled by a unified first syntax element, and this flag may be of a sequence-level, a picture-level, a slice-level, and a coding tree unit-level, etc. The flag controls whether some or all technologies based on the template matching, which include reordering of the filtering-model-candidate list based on the template matching in the embodiments of the disclosure, are allowed. When the unified flag is enabled, further encoding of a flag for each template matching technology is allowed. The reordering of the filtering-model-candidate list based on the template matching herein may also be controlled by the unified flag. The enablement of the reordering of the filtering-model-candidate list based on the template matching may be controlled by the second syntax element, and this flag may be of a sequence-level, a picture-level, a slice-level, and a coding tree unit-level, etc.

S2203, a target filtering model for the current block is determined according to the target filtering-model-candidate list. The target filtering model includes a target reference region and a target filter.

In some embodiments, the target filtering model for the current block is determined according to the target filtering-model-candidate list as follows. The first filtering model in the target filtering-model-candidate list is obtained as the target filtering model. That is, a filtering model ranked first in the target filtering-model-candidate list (whether reordered or not) is obtained as the target filtering model.

In some embodiments, the target filtering model for the current block is determined according to the target filtering-model-candidate list as follows. The first $M$ candidate filtering models in the target filtering-model-candidate list are obtained sequentially as the target filtering models. Furthermore, the encoding end determines an optimal filter model from the first $M$ candidate filtering models through encoding decision.

S2204, coefficients of the target filter are determined according to the target reference region.

In some embodiments, a method for determining coefficients of a filter (including a candidate filter and the target filter) may include the following. At least one reference sub-region in a current reference region is determined. The current reference region is the target reference region, a first candidate reference region, or a second candidate reference region. An autocorrelation coefficient matrix and a cross-correlation coefficient vector of each of the at least one reference sub-region are obtained. Coefficients of the current filter are determined according to the autocorrelation coefficient matrix and the cross-correlation coefficient vector of each of the at least one reference sub-region.

In some embodiments, the method further includes the following. Multiple reference sub-regions for the current block are determined, where the multiple reference sub-regions do not overlap. An autocorrelation coefficient matrix and a cross-correlation coefficient vector of each of the multiple reference sub-regions are obtained according to the multiple reference sub-regions and the candidate filters. The autocorrelation coefficient matrix and the cross-correlation coefficient vector of each of the multiple reference sub-regions are stored into a preset buffer. The autocorrelation coefficient matrix and the cross-correlation coefficient vector of each of the at least one reference sub-region are obtained as follows. The autocorrelation coefficient matrix and the cross-correlation coefficient vector of each of the at least one reference sub-region are obtained from the preset buffer.

Exemplarily, each reference region illustrated in FIG. 16 is composed of any of three reference sub-regions, i.e., an upper reference sub-region, a left reference sub-region, and an upper-left reference sub-region. Therefore, after obtaining an autocorrelation coefficient matrix and a cross-correlation coefficient vector of each of the upper reference sub-regions, the left reference sub-regions, and the upper-left reference sub-regions, an autocorrelation coefficient matrix and a cross-correlation coefficient vector of the complete reference region can be obtained through combination of any two or more reference sub-regions, so as to further solve for the filter coefficients. In the embodiments of the disclosure, after deriving the filter coefficients according to the combination of current reference sub-regions, each time when an unconstructed reference sub-region is encountered, an autocorrelation coefficient matrix and a cross-correlation coefficient vector of the unconstructed reference sub-region need to be stored for subsequent use for other combinations. Thus, subsequent computational complexity can be reduced.

S2205, intra prediction is performed on the current block according to the coefficients of the target filter to determine a prediction value of the current block.

In some embodiments, intra prediction is performed on the current block according to the coefficients of the target filter to determine the prediction value of the current block as follows. For a pixel to be predicted in the current block, a reconstructed value of a reference sample in the target reference region is determined. A prediction value of the pixel to be predicted in the current block is determined according to the coefficients of the target filter and the reconstructed value of the reference sample. It should be noted that, in order to reduce computational complexity, the embodiments of the disclosure may adopt the prediction method illustrated in formula (2) to determine the prediction value.

In other embodiments, a prediction method of subtracting a mean value from input samples and output samples may also be used. Also, a prediction method of finding a maximum value and a minimum value in the reference region to restrict a range of prediction values may also be used.

FIG. 20 illustrates a schematic diagram of filters corresponding to different tap numbers in the embodiments of the disclosure. As illustrated in FIG. 20, 10 types of filters corresponding to 10 tap numbers are provided.

FIG. 21 illustrates a schematic diagram of prediction directions of different filters in FIG. 20. As illustrated in FIG. 20, a filter performs prediction in a diagonal direction, where grid-filled parts represent positions of inputs of the filter and blank-filled parts represent positions of outputs of the filter. Additionally, in implementation, pixels to be predicted on a same diagonal can be predicted in parallel.

S2206, an encoding decision is made according to the prediction value and an original value of the current block to determine whether the target prediction mode is used for the current block, and prediction mode indication information is encoded.

It should be noted that the target prediction mode in the embodiments of the disclosure is an intra prediction mode, and specifically may be a prediction mode for intra prediction based on the target filtering model. The prediction mode indication information may include a block-level syntax element for indicating whether the target prediction mode is used for the current block. The prediction mode indication information is encoded and sent to a decoding end. The decoding end parses the prediction mode indication information, and performs the decoding method in any one of the embodiments of the disclosure when determining that the target prediction mode is selected for the current block.

Otherwise, the decoding end does not perform the method.

In some embodiments, cost calculation is performed according to the prediction value and the original value of the current block to obtain a second cost parameter. The encoding decision is made according to the second cost parameter to determine whether the target prediction mode is used for the current block. The prediction mode indication information is determined according to the decision. The prediction mode indication information is encoded to obtain encoded bits, and the encoded bits are signalled into a bitstream.

In some embodiments, the target filtering model for the current block is determined according to the target filtering-model-candidate list as follows. The first $M$ candidate filtering models in the target filtering-model-candidate list are obtained sequentially as the target filtering models. The method further includes the following. When it is determined that the target prediction mode is used for the current block, an index value of the optimal filtering model corresponding to the target prediction mode is determined. The index value of the optimal filtering model is encoded, and the resulting encoded bits are signalled into the bitstream. In some embodiments, $M$ is less than the total number of models in the target candidate list. Making encoding decisions based on the first $M$ candidate filtering models can reduce the time complexity of computation at the encoding end.

It should be noted that, if the encoding end determines that the target prediction mode is used according to the encoding decision and determines the index value of the optimal filtering model from $M$ candidate filtering models, the encoding end encodes the index value and send to the decoding end. The decoding end parses the index value of the optimal filtering model and determines the optimal filtering model from the target filtering-model-candidate list.

Exemplarily, the index value of the target filtering model is encoded and the resulting encoded bits are signalled into the bitstream as follows. $N$ binary symbols indicating the index value of the target filtering model are determined, where $N$ is an integer. The $N$ binary symbols are encoded and the resulting encoded bits are signalled into the bitstream.

In some embodiments, the encoding method for binarization of the index value may be one of the following: truncated unary coding, truncated binary coding, and truncated Golomb-Rice coding. Each binary symbol may be encoded using a context model or with equal probability.

By adopting the above technical solution, candidate filtering models are obtained through different combinations of reference regions and filters, so types of filtering models are expanded. Then the candidate filtering models are ordered to obtain a filtering-model-candidate list, and an optimal filtering model can be determined for intra prediction. In this way, intra prediction accuracy and coding performance can be improved.

In yet another embodiment of the disclosure, based on the coding method described in the foregoing embodiments, improvements to the EIP mode are provided. The following describes improvement points in detail from several aspects.

(I) Restrict a range of prediction values by using the maximum value and/or the minimum value.

In a possible embodiment, a prediction process is started from an upper-left corner of a current block and proceeds in a specific order toward a lower-left corner. A prediction formula is as follows:

$$pred_r = Clip\left(min, max, \left(m + \sum\left((t_{r+p_n} - m) \times c_n\right)\right)\right) \tag{7}$$

In *Clip*(*a*, *b*, *c*), *a* and *b* are used for restricting an output range of prediction results. In the formula, $pred_r$ is a prediction result of position r in the current block, *min* and *max* are the minimum value and the maximum value obtained earlier, and *m* is a certain value obtained earlier. In the formula, $t_{r+p_n}$ represents an input of an extrapolation filter, and the input needs to minus *m* and further be multiplied by corresponding filter coefficients and summed up. When $t_{r+pn}$ is in a reconstructed region, a reconstructed value is used as an input of the extrapolation filter. When $t_{r+pn}$ is in the current block, an obtained prediction value is used as an input of the extrapolation filter.

Exemplarily, FIG. 5 illustrates the extrapolation filter performing prediction in a diagonal direction, where grid-filled parts represent positions of inputs of the extrapolation filter and black-filled parts represent positions of outputs of the extrapolation filter. Additionally, in implementation, pixels to be predicted on the same diagonal can be predicted in parallel.

(II) Subtract a mean value from samples.

For obtaining filter coefficients, input samples and output samples of a filter can subtract the mean value, which makes the solved filter coefficients more conducive to improving fitting effect of the extrapolation filter. It means that when the extrapolation filter is used for performing prediction on the current block, correspondingly, the input needs to subtract the mean value before fed to the extrapolation filter, and the output needs to add the mean value back to obtain the prediction value. Compared with the basic prediction formula, additional steps of subtracting the mean value and adding the mean value back to the output are required.

$$pred_r = m + \sum((t_{r+p_n} - m) \times c_n) \tag{8}$$

In the formula, $m$ is the mean value aforementioned, which can be a reconstructed value in the reconstructed region around a current prediction block or a mean value of some reconstructed values.

(III) Restrict enablement of the extrapolation filtering mode based on the shape of the block.

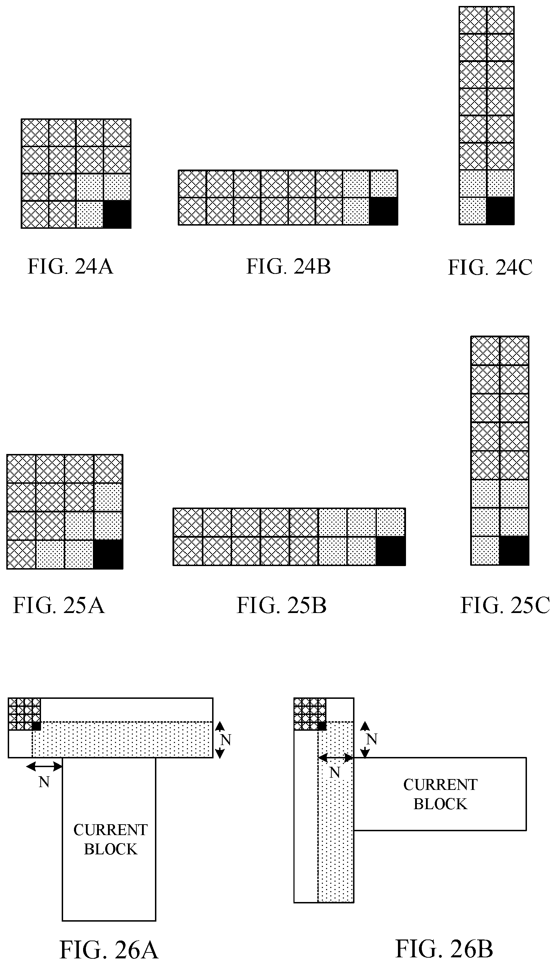

For a current block with a width of 4 and a height of 16, if an upper reconstructed region is used for obtaining the filter coefficients, there are more pixels to be predicted but few pixels in the reference region for obtaining filter coefficients, as specifically illustrated in FIG. 26A. For a current block with a width of 16 and a height of 4, if a left reconstructed region is used for obtaining filter coefficients, there are many pixels to be predicted but few pixels in the reference region for obtaining filter coefficients, as specifically illustrated in FIG. 26B. For the current block with the width of 16 and the height of 4, $N$ is 4, there are a total of $4 \times 16 = 64$ pixels to be predicted, while the number of samples used for obtaining filter coefficients is $N \times (N + 4 \times 2) = 48$. The extrapolation filter coefficients obtained from insufficient samples often result in poor prediction effect.

In the embodiments of the disclosure, for a ratio of a width of the current block to a height of the current block, it is further proposed that when width$\times N$ < height, it is prohibited to use the upper reconstructed region to derive the filter coefficients; when height$\times N$ < width, it is prohibited to use the left reconstructed region to derive the filter coefficients. For example, $N=2$.

In this case, during encoding and decoding of filtering modes, some candidate filtering models are restricted according to the aspect ratio, resulting in different numbers of allowed candidate filtering models under different aspect ratios. Therefore, when a syntax element identifier of the filtering mode is parsed, a selection of context model for the syntax element identifier should be related to factors such as the shape of the block and the aspect ratio.

(IV) Extension of chroma intra prediction modes

DM mode is an efficient intra chroma prediction mode applied in many standards for prediction. When the DM mode is selected for a chroma block, a mode selected for a luma block at a corresponding position of the chroma block will be obtained for the chroma block for intra prediction. The extrapolation filtering technology described in the foregoing embodiments only acts on the intra prediction of luma blocks. A direct approach is to extend the mode to chroma, but it would result in a need to derive filter parameters for chroma block as well, which brings high computational complexity. In related art, there is no extrapolation filtering prediction mode for chroma. When DM mode is selected for a chroma intra block, the DM mode is set to PLANAR mode.

However, for luma blocks using the extrapolation filtering mode, a traditional prediction mode can be derived by constructing a gradient histogram. The traditional mode can be used when the DM mode is selected for the chroma mode and the extrapolation filtering mode is selected for the luma block at a corresponding position of the chroma block.

(V) Selection of basic transform kernels for prediction blocks in extrapolation filtering mode.

After the prediction of the current block is completed, at an encoding end, a residual value is calculated according to the prediction value and an original value, and the residual value is further transformed and quantized. At a decoding end, a reconstructed residual value is obtained by inverse quantization and inverse transform of quantized coefficients parsed from a bitstream. The reconstructed residual value is added to the prediction value to obtain a reconstructed value.

The foregoing embodiments describe a method of deriving a gradient histogram from an extrapolation filtering prediction result, matching the extrapolation filtering prediction result to a traditional prediction mode, and further selecting a non-separable transform kernel. For basic transform kernels other than non-separable transform kernels, the selection of transform kernels is the same as the selection of PLANAR mode. However, the extrapolation filtering mode has different characteristics from the PLANAR mode, and the selection of basic transform kernels should be more optimized for the extrapolation filtering mode.

In the reference software ECM, basic transforms include horizontal and vertical directions. Transform methods allowed in each direction include the following 7 types: {'DCT2', 'DCT8', 'DST7', 'DCT5', 'DST4', 'DST1', 'IDTR'}. DCT2, DCT8, and DCT5 are subclasses of DCT. DST7, DST4, and DST1 are subclasses of DST. IDTR is identity transform, indicating no transformation.

In the reference software ECM, the most commonly-used basic transform mode is DCT2 in both horizontal and vertical directions, written as DCT2-DCT2. The DCT2-DCT2 is used as a primary transform before a non-separable secondary transform LFNST. The DCT2-DCT2 is also used as a transform when MTS technology is disabled. When a MTS mode is selected, the transformation is a combination of basic transforms in the horizontal direction and the vertical direction, instead of a non-separable transform. In ECM, according to characteristics of non-zero coefficients in the current block obtained from parsing, the current block can have up to 6 available transform kernels that are non-DCT2-DCT2.

In the embodiment of the disclosure, for the prediction block in extrapolation filtering mode, a MTS basic transform kernel for residual values of the prediction block should be related to whether the extrapolation filtering mode is selected for the current block. More specifically, the MTS basic transform kernel can be related to which sub-mode of the extrapolation filtering mode is selected and/or the size and the shape of the current block. Exemplarily, two candidate implementations of basic transform kernels that can be used for the current MTS design in ECM are provided in the embodiments of the disclosure.

In a possible implementation, basic transform kernels optional for MTS are related to whether the extrapolation filtering prediction mode is selected for the current block. If the extrapolation filtering prediction mode is used for the current block, the 6 MTS transform kernels are as follows (transform kernel: horizontal transform-vertical transform), with reference to Table 7 for details.

Table 7

| Index Value of MTS | 0 | 1 | 2 | 3 | 4 | 5 |
|---|---|---|---|---|---|---|
| Transform Kernel | DST7-DST7 | DST7-DST4 | DST4-DST7 | DST4-DST4 | DST1-DST7 | DST7-DST1 |

When MTS is selected and the prediction mode of the current block is the extrapolation prediction mode, a corresponding target transform kernel is selected for inverse transform from the 6 transform kernels according to a parsed index value of the MTS transform kernel.

In another possible implementation, the basic transform kernels optional for MTS are related to whether the extrapolation filtering mode is selected for the current block and the size and the shape of the current block. The size and the shape of the block are expressed as height×width. Details are given in Table 8.

Table 8

| Index Value of MTS | 0 | 1 | 2 | 3 | 4 | 5 |
|---|---|---|---|---|---|---|
| 4x4 block | IDTR-IDTR | DST4-DST4 | IDTR-DST4 | DST4-IDTR | DST4-DCT8 | DCT8-DST4 |
| 4x8 block | IDTR-IDTR | DST4-DST4 | DST1-DST4 | DST7-DST4 | DCT8-DST4 | DST4-DCT5 |
| 4x16 block | DST7-DST4 | DST4-DST4 | DST1-DST4 | IDTR-IDTR | DCT5-DST4 | DST7-DCT5 |
| 4x32 block | DST4-DST4 | DST7-DST4 | DST4-DCT5 | DCT2-DCT5 | DST7-DCT5 | DCT2-IDTR |
| 8x4 block | IDTR-IDTR | DST4-DST4 | DST4-DST1 | DST4-DST7 | DST4-DCT8 | DCT5-DST4 |
| 8x8 block | DST7-DST7 | DST4-DST4 | DST7-DCT2 | DCT2-DST7 | DST7-DST1 | DST1-DST7 |
| 8x16 block | DST7-DST7 | DST1-DST7 | DST7-DST4 | DST1-DST4 | DCT5-DST7 | DST4-DST7 |
| 8x32 block | DST7-DST7 | DST4-DST7 | DCT2-DST7 | DST1-DST7 | DST7-DST4 | DCT5-DST7 |
| 16x4 block | DST4-DST7 | DST4-DST4 | DST4-DST1 | IDTR-IDTR | DST4-DCT5 | DCT5-DST7 |
| 16x8 block | DST7-DST7 | DST7-DST1 | DST4-DST7 | DST4-DST1 | DST7-DCT5 | DST7-DST4 |
| 16x16 block | DST7-DST7 | DST7-DST1 | DST1-DST7 | DCT5-DST7 | DST7-DCT5 | DST7-DST4 |
| 16x32 block | DST7-DST7 | DST4-DST7 | DCT2-DST7 | DST1-DST7 | DST7-DCT5 | DCT5-DST7 |
| 32x4 block | DST4-DST4 | DST4-DST7 | DCT5-DST4 | DCT5-DCT2 | DCT5-DST7 | IDTR-DCT2 |
| 32x8 block | DST7-DST7 | DST7-DST4 | DST7-DCT2 | DST7-DST1 | DST4-DST7 | DST7-DCT5 |
| 32x16 block | DST7-DST7 | DST7-DST4 | DST7-DCT2 | DST7-DST1 | DCT5-DST7 | DST7-DCT5 |
| 32x32 block | DST7-DST7 | DST4-DST7 | DST7-DST4 | DCT5-DST7 | DST7-DCT5 | DCT2-DST7 |

When MTS is selected and the prediction mode of the current block is the extrapolation prediction mode, the corresponding target transform kernel is selected for inverse transform according to the parsed index value of the MTS transform kernel and the shape and the size of the block. In the embodiment, the extrapolation filtering prediction mode is applicable to luma blocks ranging from 4×4 to 32×32.

It should also be noted that the method for obtaining the above candidate MTS transform kernels may include the following.

Step 1, an image set or video set is encoded using an encoder with the extrapolation filtering prediction mode.

Step 2, for each classification (classified by such as the shape and size of the block, and the extrapolation filter mode), possible transform kernels in the horizontal-vertical directions are selected for residuals of blocks in the selected extrapolation filtering mode. The criteria for transform kernel selection may be the value of SAD, SSE, or other metrics, such as transform coding gain. The transform coding gain is defined as the arithmetic mean of transform-coefficient-variance divided by the geometric mean of transform-coefficient-variance.

(VI) Non-linear terms and bias terms in extrapolation filtering.

In the extrapolation filtering described in the foregoing embodiments, the prediction of extrapolation filtering does not contain non-linear terms or bias terms. To improve coding performance gains brought by the non-linear terms or the bias terms, the non-linear terms or the bias terms can also be added to the extrapolation filtering. 15 linear terms used in the implementation are illustrated in FIG. 3A, FIG. 3B, and FIG. 3C for three cases. The grid-filled positions are linear terms of the 15-tap extrapolation filter, and the black-filled position is the current position to be predicted. On the basis, 3-tap non-linear terms can also be added. The position of the reconstructed pixel used for non-linear terms are illustrated in FIG. 23A, FIG. 23B, and FIG. 23C, specifically the three dot-filled positions.

Extrapolation input for the 15 linear terms is $p_i = t_i - m$, where $i$ ranges from 0 to 14, corresponding to 14 grid-filled positions around the current position to be predicted. $t_i$ is a reconstructed value or prediction value of the grid-filled position (depending on whether the input required for the current position to be predicted is in the current block or in the reference region). $m$ is a certain value to be subtracted, which can be a reconstructed value of the upper-left corner of the current block or an average value of the reference region, and is not specifically limited herein.

Extrapolation input for the 3 non-linear terms is $p_i = ((t_i - m) \times (t_i - m) + midVal) >> bitDepth$, where $i$ corresponds to the three dot-filled positions, $t_i$ is a value of the non-linear term, and midVal is 512 and bitDepth is 10 in the case of 10-bit. Thus, when the non-linear terms are added, a calculation formula for the prediction value of the current prediction position is as follows.

$$\text{Pred} = \text{Clip}(\min, \max, (\text{m} + \textstyle\sum_{i0=0}^{14}((\text{t}_{i0} - \text{m}) \times \text{c}_{i0}) + \sum_{i1=0}^{2}(\text{p}_{i1} \times \text{c}_{i1}))) \qquad (9)$$

It should also be noted that in the acquisition of extrapolation filter coefficients, corresponding non-linear term values should also be added when constructing an autocorrelation coefficient matrix and a cross-correlation coefficient vector. Additionally or alternatively, when a bias term exists, the bias term value should be further added when constructing the autocorrelation coefficient matrix and the cross-correlation coefficient vector.

In addition to the above embodiments, adding 3-tap non-linear terms to the 15-tap linear terms of the target filter can also be as illustrated in FIG. 24A, FIG. 24B, and FIG. 24C. The non-linear terms are specifically the three dot-filled positions, and the black-filled position represents the current position to be predicted. Compared with FIG. 23A, FIG. 23B, and FIG. 23C, although three non-linear terms are added as well, calculations of FIG. 24A, FIG. 24B, and FIG. 24C are simpler and the complexity is further reduced because filters of different shapes use the same non-linear terms.

Furthermore, regarding the number of non-linear terms, in addition to 3 non-linear terms, embodiments of the disclosure can also use more non-linear terms. For example, 5 non-linear terms are used in FIG. 25A, FIG. 25B, and FIG. 25C. As illustrated in FIG. 25A, FIG. 25B, and FIG. 25C, 5-tap non-linear terms are added on the basis of the 15-tap linear terms of the extrapolation filter, where the non-linear terms are specifically dot-filled positions, and the black-filled position represents the current position to be predicted. That is, in the embodiments of the disclosure, the number of non-linear terms should be a positive integer, and the specific number is not limited. Different designs can be made according to performance complexity requirements.

In some embodiments, when linear terms are mean-subtracted, non-linear terms can also be mean-subtracted.

The bias term is an additional tap of filter coefficients, which is used to multiply a constant when calculating the prediction value. The constant can be related to a bit depth of a pixel. For example, for a 10-bit video sequence, the constant can be 512 (i.e., $2^{10-1}$). Thus, a calculation formula for the prediction value of the current prediction position is as follows:

$$Pred = \textstyle\sum_{i=0}^{a}(t_i \times c_i) + 512 \times c_{a+1} \qquad (10)$$

In the embodiment of the disclosure, the specific implementations of the foregoing embodiments are described in detail through the above embodiments, It can be seen that according to the technical solutions of the foregoing embodiments, candidate filtering models are obtained through different combinations of reference regions and filters, so types of filtering models are expanded. Then, the candidate filtering models are ordered to obtain a filtering-model-candidate list, and an optimal filtering model can be determined for intra prediction. In this way, intra prediction accuracy and coding performance can be improved.

Furthermore, the performance of the coding method provided by the embodiments of the disclosure is tested under examples of 4 types of reference regions illustrated in FIG. 16 and shapes of the filters illustrated in FIG. 20.

Test result 1: 8-tap filter, without reordering

| | All Intra Main 10 | | | | |
| --- | --- | --- | --- | --- | --- |
| | Over anchor | | | | |
| | Y | U | V | EncT | DecT |
| Class A1 | -0.06% | 0.04% | -0.13% | 101.5% | 102.8% |
| Class A2 | -0.05% | -0.02% | -0.07% | 101.4% | 102.7% |
| Class B | -0.05% | -0.04% | -0.06% | 101.6% | 102.3% |
| Class C | -0.05% | 0.11% | 0.17% | 100.6% | 101.8% |
| Class E | -0.03% | 0.10% | -0.02% | 101.7% | 102.2% |
| **Overall** | -0.05% | 0.03% | -0.01% | 101.3% | 102.3% |
| Class D | 0.04% | -0.05% | 0.01% | 100.5% | 102.2% |
| Class F | -0.06% | -0.20% | -0.06% | 101.4% | 103.1% |
| Class TGM | #VALUE! | #VALUE! | #VALUE! | #VALUE! | #VALUE! |

Test result 2: 9-tap filter, without reordering

| | All Intra Main 10 | | | | |
| --- | --- | --- | --- | --- | --- |
| | Over anchor | | | | |
| | Y | U | V | EncT | DecT |
| Class A1 | -0.05% | -0.02% | -0.11% | 102.5% | 102.0% |
| Class A2 | -0.08% | -0.03% | -0.06% | 102.3% | 101.7% |
| Class B | -0.08% | -0.06% | -0.08% | 102.6% | 101.7% |
| Class C | -0.08% | -0.04% | 0.04% | 100.7% | 101.6% |
| Class E | -0.09% | -0.04% | -0.12% | 102.3% | 101.7% |
| **Overall** | -0.08% | -0.04% | -0.06% | 102.1% | 101.7% |
| Class D | 0.02% | 0.05% | -0.01% | 100.3% | 103.6% |
| Class F | -0.07% | -0.18% | -0.08% | 102.9% | 101.7% |
| Class TGM | #VALUE! | #VALUE! | #VALUE! | #VALUE! | #VALUE! |

Test result 3: 10-tap filter, without reordering

| | All Intra Main 10 | | | | |
|---|---|---|---|---|---|
| | Over anchor | | | | |
| | Y | U | V | EncT | DecT |
| Class A1 | -0.06% | -0.09% | -0.14% | 102.6% | 101.7% |
| Class A2 | -0.07% | -0.07% | -0.04% | 102.4% | 101.9% |
| Class B | -0.08% | 0.01% | -0.07% | 102.7% | 101.7% |
| Class C | -0.10% | -0.08% | -0.04% | 102.1% | 102.4% |
| Class E | -0.08% | -0.05% | -0.25% | 102.6% | 102.1% |
| **Overall** | -0.08% | -0.05% | -0.10% | 102.5% | 101.9% |
| Class D | 0.03% | -0.09% | -0.01% | 101.8% | 101.9% |
| Class F | -0.05% | -0.11% | -0.01% | 103.1% | 101.5% |
| Class TGM | #VALUE! | #VALUE! | #VALUE! | #VALUE! | #VALUE! |

Test result 4: 12-tap filter, without reordering

| | All Intra Main 10 | | | | |
|---|---|---|---|---|---|
| | Over anchor | | | | |
| | Y | U | V | EncT | DecT |
| Class A1 | -0.07% | 0.01% | -0.10% | 102.1% | 102.7% |
| Class A2 | -0.09% | -0.03% | -0.08% | 101.9% | 101.9% |
| Class B | -0.08% | -0.07% | -0.05% | 102.3% | 101.3% |
| Class C | -0.10% | -0.02% | 0.05% | 100.6% | 100.3% |
| Class E | -0.10% | -0.03% | -0.20% | 102.1% | 101.0% |
| **Overall** | -0.09% | -0.03% | -0.07% | 101.8% | 101.4% |
| Class D | 0.03% | -0.06% | -0.03% | 100.4% | 99.1% |
| Class F | -0.08% | 0.04% | 0.00% | 103.2% | 100.8% |
| Class TGM | #VALUE! | #VALUE! | #VALUE! | #VALUE! | #VALUE! |

Test result 5: 14-tap filter, without reordering

| | All Intra Main 10 | | | | |
|---|---|---|---|---|---|
| | Over anchor | | | | |
| | Y | U | V | EncT | DecT |
| Class A1 | -0.07% | 0.06% | -0.19% | 102.0% | 102.3% |
| Class A2 | -0.08% | 0.01% | -0.07% | 101.8% | 102.2% |
| Class B | -0.07% | -0.07% | -0.04% | 102.0% | 101.3% |
| Class C | -0.08% | -0.07% | -0.06% | 101.5% | 100.8% |
| Class E | -0.11% | -0.16% | -0.16% | 102.6% | 101.6% |
| **Overall** | -0.08% | -0.05% | -0.09% \| | 101.9% | 101.6% |

(continued)

| | All Intra Main 10 | | | | |
|---|---|---|---|---|---|
| | Over anchor | | | | |
| | Y | U | V | EncT | DecT |
| Class D | 0.05% | -0.04% | -0.13% | 100.9% | 99.7% |
| Class F | 0.00% | -0.10% | 0.01% | 100.6% | 101.3% |
| Class TGM | #VALUE! | #VALUE! | #VALUE! | #VALUE! | #VALUE! |

Test result 6: 15-tap filter, without reordering

| | All Intra Main 10 | | | | |
|---|---|---|---|---|---|
| | Over anchor | | | | |
| | Y | U | V | EncT | DecT |
| Class A1 | -0.06% | 0.05% | -0.06% | 101.8% | 101.1% |
| Class A2 | -0.11% | -0.17% | -0.03% | 101.5% | 101.4% |
| Class B | -0.08% | -0.09% | -0.05% | 101.9% | 100.9% |
| Class C | -0.10% | -0.07% | 0.05% | 101.1% | 100.5% |
| Class E | -0.13% | -0.13% | -0.14% | 102.2% | 101.1% |
| **Overall** | -0.09% | -0.08% | -0.04% | 101.7% | 101.0% | |
| Class D | 0.04% | -0.01% | -0.03% | 101.6% | 100.5% |
| Class F | -0.11% | -0.13% | 0.07% | 100.7% | 100.5% |
| Class TGM | #VALUE! | #VALUE! | #VALUE! | #VALUE! | #VALUE! |

Test result 7: 8-tap filter, with reordering

| | All Intra Main 10 | | | | |
|---|---|---|---|---|---|
| | Over anchor | | | | |
| | Y | U | V | EncT | DecT |
| Class A1 | -0.05% | -0.05% | -0.04% | 102.1% | 102.2% |
| Class A2 | -0.05% | -0.02% | -0.03% | 102.0% | 101.7% |
| Class B | -0.06% | 0.05% | -0.15% | 102.0% | 101.3% |
| Class C | -0.06% | -0.02% | 0.03% | 102.2% | 102.4% |
| Class E | -0.04% | 0.00% | -0.18% | 102.4% | 103.0% |
| **Overall** | -0.05% | 0.00% | -0.08% | 102.1% | 102.1% |
| Class D | 0.04% | 0.09% | 0.06% | 102.3% | 105.7% |
| Class F | -0.07% | -0.12% | 0.12% | 101.8% | 101.3% |
| Class TGM | #VALUE! | #VALUE! | #VALUE! | #VALUE! | #VALUE! |

Test result 8: 9-tap filter, with reordering

| | All Intra Main 10 | | | | |
|---|---|---|---|---|---|
| | Over anchor | | | | |
| | Y | U | V | EncT | DecT |
| Class A1 | -0.06% | -0.15% | -0.12% | 101.3% | 101.0% |
| Class A2 | -0.09% | -0.06% | -0.09% | 101.3% | 100.3% |
| Class B | -0.08% | -0.01% | -0.19% | 101.3% | 99.7% |
| Class C | -0.11% | 0.01% | 0.12% | 101.6% | 100.2% |
| Class E | -0.10% | -0.10% | -0.27% | 101.4% | 100.1% |
| **Overall** | -0.09% | -0.05% | -0.10% | 101.4% | 100.2% |
| Class D | 0.01% | 0.12% | -0.10% | 101.1% | 104.7% |
| Class F | -0.08% | -0.06% | 0.02% | 101.3% | 98.8% |
| Class TGM | #VALUE! | #VALUE! | #VALUE! | #VALUE! | #VALUE! |

Test result 9: 10-tap filter, with reordering

| | All Intra Main 10 | | | | |
|---|---|---|---|---|---|
| | Over anchor | | | | |
| | Y | U | V | EncT | DecT |
| Class A1 | -0.07% | -0.07% | -0.14% | 101.7% | 101.0% |
| Class A2 | -0.07% | -0.11% | -0.04% | 102.5% | 102.1% |
| Class B | -0.08% | -0.04% | -0.02% | 101.7% | 101.3% |
| Class C | -0.11% | -0.10% | -0.06% | 101.3% | 100.0% |
| Class E | -0.10% | -0.11% | -0.26% | 102.7% | 100.0% |
| **Overall** | -0.09% | -0.08% | -0.09% | 101.9% | 100.9% |
| Class D | 0.03% | 0.12% | -0.05% | 101.1% | 101.1% |
| Class F | -0.03% | -0.12% | -0.03% | 102.4% | 102.7% |
| Class TGM | #VALUE! | #VALUE! | #VALUE! | #VALUE! | #VALUE! |

Test result 10: 12-tap filter, with reordering

| | All Intra Main 10 | | | | |
|---|---|---|---|---|---|
| | Over anchor | | | | |
| | Y | U | V | EncT | DecT |
| Class A1 | -0.07% | -0.06% | -0.06% | 103.2% | 103.3% |
| Class A2 | -0.09% | -0.02% | -0.02% | 102.5% | 101.6% |
| Class B | -0.09% | -0.01% | -0.05% | 102.9% | 102.6% |

(continued)

| | All Intra Main 10 | | | | |
|---|---|---|---|---|---|
| | Over anchor | | | | |
| | Y | U | V | EncT | DecT |
| Class C | -0.10% | -0.04% | -0.03% | 101.2% | 99.2% |
| Class E | -0.11% | -0.09% | -0.20% | 102.6% | 100.0% |
| **Overall** | -0.09% | -0.04% | -0.07% | 102.5% | 101.4% |
| Class D | 0.02% | 0.25% | -0.22% | 101.8% | 101.3% |
| Class F | -0.10% | -0.07% | -0.06% | 104.3% | 101.7% |
| Class TGM | #VALUE! | #VALUE! | #VALUE! | #VALUE! | #VALUE! |

Test result 11: 14-tap filter, with reordering

| | All Intra Main 10 | | | | |
|---|---|---|---|---|---|
| | Over anchor | | | | |
| | Y | U | V | EncT | DecT |
| Class A1 | -0.08% | 0.01% | -0.11% | 101.7% | 100.3% |
| Class A2 | -0.08% | -0.08% | -0.10% | 101.5% | 99.9% |
| Class B | -0.07% | -0.12% | -0.13% | 102.1% | 99.8% |
| Class C | -0.09% | -0.04% | 0.07% | 101.7% | 99.9% |
| Class E | -0.12% | -0.10% | -0.29% | 102.7% | 99.8% |
| **Overall** | -0.09% | -0.07% | -0.10% | 101.9% | 99.9% |
| Class D | 0.03% | 0.09% | -0.27% | 101.9% | 99.2% |
| Class F | -0.07% | -0.09% | 0.07% | 102.0% | 99.3% |
| Class TGM | #VALUE! | #VALUE! | #VALUE! | #VALUE! | #VALUE! |

Test result 12: 15-tap filter, with reordering

| | All Intra Main 10 | | | | |
|---|---|---|---|---|---|
| | Over anchor | | | | |
| | Y | U | V | EncT | DecT |
| Class A1 | -0.06% | 0.01% | -0.06% | 101.4% | 99.8% |
| Class A2 | -0.10% | -0.09% | -0.09% | 102.3% | 101.8% |
| Class B | -0.08% | -0.10% | -0.09% | 102.1% | 100.1% |
| Class C | -0.10% | -0.10% | -0.04% | 100.8% | 102.0% |
| Class E | -0.12% | -0.10% | -0.16% | 102.1% | 101.3% |
| **Overall** | -0.09% | -0.08% | -0.09% | 101.7% | 101.0% |
| Class D | 0.04% | 0.11% | -0.09% | 101.0% | 105.1% |
| Class F | -0.08% | -0.14% | 0.20% | 100.7% | 100.2% |

(continued)

| | All Intra Main 10 | | | | |
| --- | --- | --- | --- | --- | --- |
| | Over anchor | | | | |
| | Y | U | V | EncT | DecT |
| Class TGM | #VALUE! | #VALUE! | #VALUE! | #VALUE! | #VALUE! |

From the above test results, it can be seen that coding performance of both the luma component and the chroma component are improved in the embodiments of the disclosure.

In yet another embodiment of the disclosure, a bitstream is further provided. The bitstream is generated by performing bit encoding on information to be encoded. The information to be encoded includes at least one of the following: an index value of a target filtering model for a current block, a residual value of the current block, prediction mode indication information, and reordering indication information of the current block. The prediction mode indication information is used for indicating whether a target prediction mode is used for the current block. The reordering indication information is used for indicating whether template matching is used for reordering a filtering-model-candidate list for the current block.

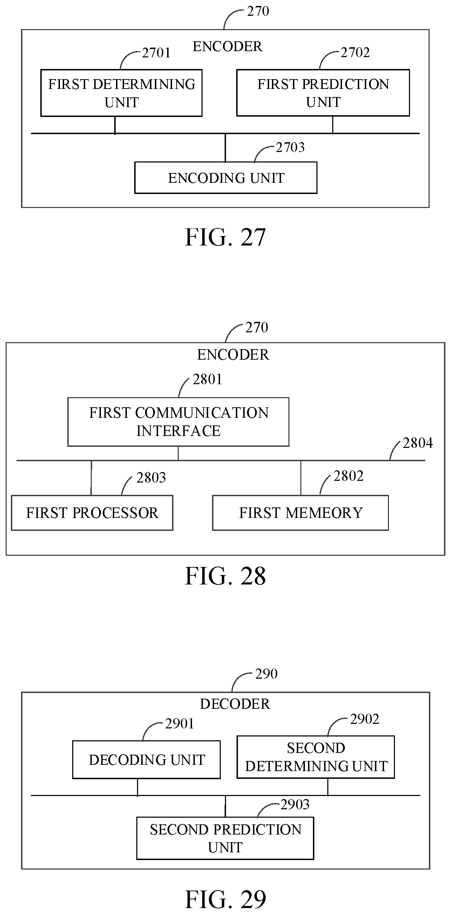

In yet another embodiment of the disclosure, based on the same inventive concept as the foregoing embodiments, FIG. 27 illustrates a schematic diagram of a composition structure of an encoder provided in embodiments of the disclosure. As illustrated in FIG. 27, an encoder 270 may include a first determining unit 2701, a first prediction unit 2702, and an encoding unit 2703. The first determining unit 2701 is configured to determine multiple candidate filtering models for a current block. The first determining unit 2701 is further configured to order the multiple candidate filtering models to determine a target filtering-model-candidate list for the current block, where the candidate filtering model includes a candidate reference region and a candidate filter. The first determining unit 2701 is further configured to determine a target filtering model for the current block according to the target filtering-model-candidate list, where the target filtering model includes a target reference region and a target filter. The first determining unit 2701 is further configured to determine coefficients of the target filter according to the target reference region. The first prediction unit 2702 is configured to determine a prediction value of the current block by performing intra prediction on the current block according to the coefficients of the target filter. The encoding unit 2703 is configured to make an encoding decision according to the prediction value and an original value of the current block to determine whether a target prediction mode is used for the current block, and encode prediction mode indication information.

It can be understood that the functional units of the encoder further perform the encoding method described in any one of the foregoing embodiments.

It will be understood that in the embodiments of the disclosure, the "unit" may be part of a circuitry, part of a processor, part of a program or software, etc., and may also be a module, or may be non-modular. In addition, various components described in the embodiments may be integrated into one processing unit or may be present as a number of physically separated units, or two or more units may be integrated into one. The integrated unit may be implemented either in the form of hardware or in the form of software function module.

If the integrated unit is implemented as a software function module and not sold or used as a stand-alone product, the integrated unit may be stored in a computer-readable storage medium. Based on such understanding, the technical solutions of the embodiments in essential, or a part that contributes to the prior art, or all or part of the technical solutions, may be embodied in the form of a software product. The computer software product is stored in a storage medium and includes a number of instructions to enable a computer device (which may be a personal computer, a server, or a network device, etc.) or processor to perform all or part of the operations of the method described in the embodiments. The aforementioned storage medium includes a USB stick, a removable hard disk, a read only memory (ROM), a random access memory (RAM), a diskette or a CD-ROM, and other media that may store program codes.

Therefore, a computer-readable storage medium is provided in embodiments of the disclosure. The computer-readable storage medium is applied to the encoder 270. The computer-readable storage medium stores a computer program which, when executed by a first processor, implements the method described in any one of the foregoing embodiments.

Based on the composition of the encoder 270 and the computer-readable storage medium, FIG. 28 illustrates a specific hardware structure of the encoder 270 provided in embodiments of the disclosure. As illustrated in FIG. 28, the encoder 270 may include a first communication interface 2801, a first memory 2802, and a first processor 2803. The various components are coupled together via a first bus system 2804. It can be understood that the first bus system 2804 is configured to enable connection communication between these components. The first bus system 2804 includes a power bus, a control bus, and a status signal bus in addition to a data bus. For the sake of clarity, however, the various buses are labelled as the first bus system 2804 in FIG. 28. The first communication interface 2801 is configured to receive and transmit signals during information transmission with other external network elements. The first memory 2802 is configured to store a computer program executable by the first processor 2803. The first processor 2803 is configured to, when executing the computer program, perform the following steps. The first processor 2803 is configured to determine multiple candidate filtering models for a current block. The first processor 2803 is further configured to order the multiple candidate filtering models to determine a target filtering-model-candidate list for the current block, where the candidate filtering model includes a candidate reference region and a candidate filter. The first processor 2803 is further configured to determine a target filtering model for the current block according to the target filtering-model-candidate list, where the target filtering model includes a target reference region and a target filter. The first processor 2803 is further configured to determine coefficients of the target filter according to the target reference region. The first processor 2803 is further configured to determine a prediction value of the current block by performing intra prediction on the current block according to the coefficients of the target filter. The first processor 2803 is further configured to make an encoding decision according to the prediction value and an original value of the current block to determine whether a target prediction mode is used for the current block, and encode prediction mode indication information.

It can be understood that each functional unit of the encoder further performs the encoding method described in any one of the foregoing embodiments.

It will be appreciated that the first memory 2802 in embodiments of the disclosure may be a transitory memory or non-transitory memory, or may include both transitory and non-transitory memory. In particular, the non-transitory memory may be a read-only memory (ROM), a programmable ROM (PROM), an erasable PROM (EPROM), an electrically EPROM (EEPROM), or a flash memory. The transitory memory may be a random access memory (RAM), which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct rambus RAM (DRRAM). The first memory 2802 of the system and method described in this disclosure is intended to include, but is not limited to, these and any other suitable types of memory.

The first processor 2803 may be an integrated circuit chip with signal processing capabilities. In implementation, the operations in the above method may be accomplished by integrated logic circuitry in the hardware of the first processor 2803 or by instructions in the form of software. The first processor 2803 described above may be a general purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 2802 and the first processor 2803 reads the information in the first memory 2802 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP Device (DSPD), programmable logic device (PLD), FPGA, general purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 2803 is further configured to perform the method described in any of the above embodiments when executing the computer program.

An encoder is provided in the embodiment. The encoder is configured to obtain candidate filtering models by performing different combinations of reference regions and filters, thereby types of filtering models are expanded. The encoder is further configured to order the candidate filtering models to obtain a filtering-model-candidate list, and determine a target filtering model from the filtering-model-candidate list for intra prediction. In this case, intra prediction accuracy and encoding performance can be improved.

In yet another embodiment of the disclosure, based on the same inventive concept as the foregoing embodiments, FIG. 27 illustrates a schematic diagram of a composition structure of a decoder provided in embodiments of the disclosure. As illustrated in FIG. 27, a decoder 290 may include a decoding unit 2901, a second determining unit 2902, and a second prediction unit 2903. The decoding unit 2901 is configured to decode a bitstream to determine that a target prediction mode is used for a current block. The second determining unit 2902 is configured to determine multiple candidate filtering models for the current block. The second determining unit 2902 is further configured to order the multiple candidate filtering models to determine a target filtering-model-candidate list for the current block, where the candidate filtering model includes a candidate reference region and a candidate filter. The second determining unit 2902 is further configured to determine a target filtering model for the current block according to the target filtering-model-candidate list, where the target filtering model includes a target reference region and a target filter. The second determining unit 2902 is further configured to determine coefficients of the target filter according to the target reference region. The second prediction unit 2903 is configured to determine a prediction value of the current block by performing intra prediction on the current block according to the coefficients of the target filter.

It can be understood that each functional unit of the decoder further performs the decoding method described in any one of the foregoing embodiments.

It will be understood that in the embodiment, the "unit" may be part of the circuitry, part of the processor, part of the program or software, etc., and of course may also be a module, or may be non-modular. In addition, various components described in the embodiments may be integrated into one processing unit or may be present as a number of physically separated units, or two or more units may be integrated into one. The integrated units may be implemented either in the form of hardware or in the form of software function modules.

If the integrated unit is implemented as a software function module and not sold or used as a stand-alone product, the integrated unit may be stored in a computer-readable storage medium. Based on such understanding, a computer-readable storage medium is provided in the embodiment. The computer-readable storage medium is applied to the decoder 290. The computer-readable storage medium stores a computer program, which, when executed by a second processor, implements the method described in any one of the foregoing embodiments.

Based on the composition of the decoder 290 and the computer-readable storage medium, FIG. 28 illustrates a schematic diagram of a specific hardware structure of the decoder 290 provided in embodiments of the disclosure. As illustrated in FIG. 28, the decoder 290 may include a second communication interface 3001, a second memory 3002, and a second processor 3003. The various components are coupled together via a second bus system 3004. It can be understood that the second bus system 3004 is configured to enable connection communication between these components. The second bus system 3004 includes a power bus, a control bus, and a status signal bus in addition to a data bus. For the sake of clarity, however, the various buses are labelled as the second bus system 3004 in FIG. 28. The second communication interface 3001 is configured to receive and transmit signals during information transmission with other external network elements. The second memory 3002 is configured to store a computer program executable by the second processor 3003. The second processor 3003 is configured to, when executing the computer program, perform the following steps. The second processor 3003 is configured to decode a bitstream to determine that a target prediction mode is used for a current block. The second processor 3003 is further configured to determine multiple candidate filtering models for the current block. The second processor 3003 is further configured to order the multiple candidate filtering models to determine a target filtering-model-candidate list for the current block, where the candidate filtering model includes a candidate reference region and a candidate filter. The second processor 3003 is further configured to determine a target filtering model for the current block according to the target filtering-model-candidate list, where the target filtering model includes a target reference region and a target filter. The second processor 3003 is further configured to determine coefficients of the target filter according to the target reference region. The second processor 3003 is further configured to determine a prediction value of the current block by performing intra prediction on the current block according to the coefficients of the target filter.

It can be understood that each functional unit of the decoder further performs the decoding method described in any one of the foregoing embodiments.

Optionally, as another embodiment, the second processor 3003 is further configured to perform the method described in any of the above embodiments when executing the computer program.

It can be understood that the hardware function of the second memory 3002 is similar to the hardware function of the first memory 2802, and the hardware function of the second processor 3003 is similar to the hardware function of the first processor 2803. Details are not repeated herein.

A decoder is provided in the embodiment. The decoder is configured to obtain candidate filtering models by performing different combinations of reference regions and filters, thereby types of filtering models are expanded. The decoder is further configured to order the candidate filtering models to obtain a filtering-model-candidate list, and determine a target filtering model from the filtering-model-candidate list for intra prediction. In this way, intra prediction accuracy and encoding performance can be improved.

In yet another embodiment of the disclosure, FIG. 29 illustrates a schematic diagram of a composition structure of an encoding and decoding system provided in embodiments of the disclosure. As illustrated in FIG. 29, the encoding and decoding system 310 may include an encoder 3101 and a decoder 3102.

In the embodiment of the disclosure, the encoder 3101 may be an encoder described in any one of the foregoing embodiments, and the decoder 3102 may be a decoder described in any one of the foregoing embodiments.

It may be noted that in the disclosure, the terms "include", "comprise" or any other variant thereof are intended to cover non-exclusive inclusion, such that a process, method, article or apparatus comprising a range of elements includes not only those elements, but also includes other elements that are not explicitly listed or are also inherent to such a process, method, article or device. Without further limitation, an element qualified by the statement "including a..." does not preclude the existence of another identical element in the process, method, article or apparatus including that element.

The above serial numbers of the embodiments of the disclosure are for descriptive purposes only and do not represent the merits of the embodiments.

The methods disclosed in the several method embodiments provided in this disclosure may be combined in any way to obtain new method embodiments without conflict.

The features disclosed in the several product embodiments provided in this disclosure may be combined in any way to obtain new product embodiments without conflict.

The features disclosed in several method or apparatus embodiments provided in this disclosure may be combined in any way to obtain new method embodiments or apparatus embodiments without conflict.

The foregoing is only a specific implementation of the present disclosure, but the scope of protection of the present disclosure is not limited thereto, and any variation or substitution readily conceivable by any person skilled in the art within the technical scope disclosed in the present disclosure shall be covered by the scope of protection of the present disclosure. Accordingly, the scope of protection of this disclosure shall be governed by the scope of protection of the stated claims.

Industrial Applicability

In the embodiments of the disclosure, whether at the encoding or decoding end, multiple candidate filtering models for the current block are determined. The multiple candidate filtering models are ordered to determine a target filtering-model-candidate list for the current block. A target filtering model for the current block is determined according to the target filtering-model-candidate list. Coefficients of the target filter are determined according to the target reference region. Intra prediction is performed on the current block according to the coefficients of the target filter to determine a prediction value of the current block. In this way, candidate filtering models can be obtained through different combinations of reference regions and filters, so types of filtering models are expanded. Then, the candidate filtering models are sorted to obtain a filtering-model-candidate list, and an optimal filtering model can be obtained for intra prediction. In this way, intra prediction accuracy and coding performance can be improved.

**Claims**

1. A decoding method, applied to a decoder and comprising:

    decoding a bitstream to determine that a target prediction mode is used for a current block;
    determining a plurality of candidate filtering models for the current block;
    ordering the plurality of candidate filtering models to determine a target filtering-model-candidate list for the current block, wherein the candidate filtering model comprises a candidate reference region and a candidate filter;
    determining a target filtering model for the current block according to the target filtering-model-candidate list, wherein the target filtering model comprises a target reference region and a target filter;
    determining coefficients of the target filter according to the target reference region; and
    determining a prediction value of the current block by performing intra prediction on the current block according to the coefficients of the target filter.

2. The method of claim 1, wherein determining the plurality of candidate filtering models for the current block comprises:

    determining at least one type of candidate reference region for the current block and at least one type of candidate filter for the current block; and
    determining the plurality of candidate filtering models for the current block according to the at least one type of candidate reference region and the at least one type of candidate filter.

3. The method of claim 2, wherein determining the at least one type of candidate reference region for the current block comprises:
    determining the at least one type of candidate reference region by performing a combination according to at least one reconstructed reference sub-region for the current block, wherein the at least one reference sub-region comprises at least one of: an upper neighboring region for the current block, a left neighboring region for the current block, and an upper-left neighboring region for the current block.

4. The method of claim 3, wherein determining the at least one type of candidate reference region by performing the combination according to the at least one reconstructed reference sub-region for the current block comprises:

determining a first-type candidate reference region according to the reconstructed upper neighboring region and the reconstructed left neighboring region for the current block;

determining a second-type candidate reference region according to the reconstructed upper neighboring region and the reconstructed upper-left neighboring region for the current block;

determining a third-type candidate reference region according to the reconstructed left neighboring region and the reconstructed upper-left neighboring region for the current block; or

determining a fourth-type candidate reference region according to the reconstructed upper neighboring region, the reconstructed left neighboring region, and the reconstructed upper-left neighboring region for the current block.

5. The method of any one of claims 1 to 4, further comprising:
determining a size parameter of the candidate reference region according to a size parameter of the current block and a size parameter of the candidate filter, wherein the size parameter comprises a height and/or a width.

6. The method of claim 5, wherein determining the size parameter of the candidate reference region according to the size parameter of the current block and the size parameter of the candidate filter comprises:

determining a minimum parameter from a height and a width of the current block;

determining a height of an upper reference sub-region and an upper-left reference sub-region of the candidate reference region according to the minimum parameter and a height of the candidate filter minus 1; and

determining a width of a left reference sub-region and the upper-left reference sub-region of the candidate reference region according to the minimum parameter and a width of the candidate filter minus 1.

7. The method of any one of claims 1 to 6, wherein ordering the plurality of candidate filtering models to determine the target filtering-model-candidate list for the current block comprises:

determining a first candidate reference region and a first candidate filter of a first candidate filtering model among the plurality of candidate filtering models;

by taking reference samples in the first candidate reference region as input samples of the first candidate filter, determining a number of output samples of the first candidate filter in the first candidate reference region;

ordering the first candidate filtering model according to the number of samples in the first candidate reference region to obtain a first filtering-model-candidate list; and

obtaining the target filtering-model-candidate list according to the first filtering-model-candidate list.

8. The method of claim 7, wherein ordering the plurality of candidate filtering models to determine the target filtering-model-candidate list for the current block further comprises:

determining coefficients of the first candidate filter according to the first candidate reference region; and

during ordering the first candidate filtering model according to the number of samples in the first candidate reference region, deleting a first candidate filtering model with duplicate coefficients of the first candidate filter to obtain the first filtering-model-candidate list.

9. The method of claim 7 or 8, wherein obtaining the target filtering-model-candidate list according to the first filtering-model-candidate list comprises:
obtaining the target filtering-model-candidate list by reordering the first filtering-model-candidate list based on template matching.

10. The method of claim 9, wherein obtaining the target filtering-model-candidate list by reordering the first filtering-model-candidate list based on the template matching comprises:

determining a second candidate reference region and a second candidate filter of a second candidate filtering model in the first filtering-model-candidate list;

determining coefficients of the second candidate filter according to the second candidate reference region;

obtaining a prediction value of a template of the current block by performing prediction on the template of the current block according to the coefficients of the second candidate filter;

performing cost calculation according to the prediction value and a reconstructed value of the template of the current block to obtain a first cost parameter; and

obtaining the target filtering-model-candidate list by reordering the first filtering-model-candidate list according to the first cost parameter.

11. The method of claim 10, wherein obtaining the prediction value of the template of the current block by performing prediction on the template of the current block according to the coefficients of the second candidate filter comprises:

determining a prediction value of a first template sample in the template of the current block according to the coefficients of the second candidate filter and reconstructed values of reference samples in the second candidate reference region; and

determining a prediction value of a second template sample in the template of the current block according to the coefficients of the second candidate filter, a reconstructed value of a reference sample in the second candidate reference region, and a prediction value of a predicted template sample, wherein the predicted template sample comprises the first template sample and/or the second template sample.

12. The method of claim 10, wherein obtaining the prediction value of the template of the current block by performing prediction on the template of the current block according to the coefficients of the second candidate filter comprises:
obtaining the prediction value of the template of the current block according to the coefficients of the second candidate filter and a reconstructed value of a reference sample in the second candidate reference region.

13. The method of claim 9, further comprising:

decoding the bitstream to determine reordering indication information;

reordering the first filtering-model-candidate list based on the template matching to obtain the target filtering-model-candidate list, based on the reordering indication information indicating that the template matching is used to reorder a filtering-model-candidate list for the current block; and

using the first filtering-model-candidate list as the target filtering-model-candidate list, based on the reordering indication information indicating that the template matching technology is not used to reorder the filtering-model-candidate list for the current block.

14. The method of claim 13, wherein the reordering indication information comprises a first syntax element and a second syntax element, and the first syntax element is used for indicating whether the template matching technology is allowed for the current block; and the second syntax element is used for indicating whether the template matching is used to reorder the filtering-model-candidate list for the current block,
wherein decoding the bitstream to determine the reordering indication information comprises:

decoding the bitstream to determine a value of the first syntax element;

decoding the bitstream to determine a value of the second syntax element, based on the value of the first syntax element being a first value;

determining that the template matching is used to reorder the filtering-model-candidate list for the current block, based on the value of the second syntax element being the first value; and

determining that the template matching technology is not used to reorder the filtering-model-candidate list for the current block, based on the value of the first syntax element being a second value or the value of the second syntax element being the second value.

15. The method of claim 14, wherein the first syntax element comprises at least one of: a sequence-level syntax element, a picture-level syntax element, a slice-level syntax element, and a coding tree unit (CTU)-level syntax element; and the second syntax element comprises at least one of: a sequence-level syntax element, a picture-level syntax element, a slice-level syntax element, and a CTU-level syntax element.

16. The method of claim 1, further comprising:

decoding the bitstream to determine an index value of the target filtering model,
wherein determining the target filtering model for the current block according to the target filtering-model-candidate list comprises:
determining the target filtering model for the current block according to the index value of the target filtering model and the target filtering-model-candidate list.

17. The method of claim 16, wherein decoding the bitstream to determine the index value of the target filtering model comprises:

decoding the bitstream to determine $N$ binary symbols indicating the index value of the target filtering model, $N$ being an integer; and

determining the index value of the target filtering model according to the $N$ binary symbols.

18. The method of claim 1, wherein determining the target filtering model for the current block according to the target filtering-model-candidate list comprises:
determining the first filtering model in the target filtering-model-candidate list as the target filtering model.

19. The method of any one of claims 1 to 18, further comprising:

determining at least one reference sub-region comprised in a current reference region, wherein the current reference region is the target reference region, the first candidate reference region, or the second candidate reference region;

obtaining an autocorrelation coefficient matrix and a cross-correlation coefficient vector for the at least one reference sub-region; and

determining coefficients of a current filter according to the autocorrelation coefficient matrix and the cross-correlation coefficient vector for the at least one reference sub-region.

20. The method of claim 19, further comprising:

determining a plurality of reference sub-regions for the current block, wherein the plurality of reference sub-regions do not overlap;

determining autocorrelation coefficient matrices and the cross-correlation coefficient vectors for the plurality of reference sub-regions according to the plurality of reference sub-regions and the candidate filter; and

storing the autocorrelation coefficient matrices and the cross-correlation coefficient vectors for the plurality of reference sub-regions into a preset buffer,

wherein obtaining the autocorrelation coefficient matrix and the cross-correlation coefficient vector for the at least one reference sub-region comprises:

obtaining the autocorrelation coefficient matrix and the cross-correlation coefficient vector for the at least one reference sub-region from the preset buffer.

21. The method of claim 1, wherein determining the prediction value of the current block by performing intra prediction on the current block according to the coefficients of the target filter comprises:

determining a reconstructed value of a reference sample corresponding to a pixel to be predicted in the current block, wherein the reference sample is in the target reference region; and

determining a prediction value of the pixel to be predicted in the current block according to the coefficients of the target filter and the reconstructed value of the reference sample.

22. The method of claim 1, wherein the target prediction mode comprises an extrapolation filtering mode.

23. An encoding method, applied to an encoder and comprising:

determining a plurality of candidate filtering models for the current block;

ordering the plurality of candidate filtering models to determine a target filtering-model-candidate list for the current block, wherein the candidate filtering model comprises a candidate reference region and a candidate filter;

determining a target filtering model for the current block according to the target filtering-model-candidate list, wherein the target filtering model comprises a target reference region and a target filter;

determining coefficients of the target filter according to the target reference region;

determining a prediction value of the current block by performing intra prediction on the current block according to the coefficients of the target filter; and

making an encoding decision according to the prediction value and an original value of the current block to determine whether a target prediction mode is used for the current block and encoding prediction mode indication information.

24. The method of claim 23, wherein determining the plurality of candidate filtering models for the current block comprises:

determining at least one type of candidate reference region for the current block and at least one type of candidate filter of the current block; and

determining the plurality of candidate filtering models for the current block according to the at least one type of candidate reference region and the at least one type of candidate filter.

25. The method of claim 24, wherein determining the at least one type of candidate reference region for the current block comprises:
determining the at least one type of candidate reference region by performing a combination according to at least one reconstructed reference sub-region for the current block, wherein the at least one reference sub-region comprises at least one of: an upper neighboring region for the current block, a left neighboring region for the current block, and an upper-left neighboring region for the current block.

26. The method of claim 25, wherein determining the at least one type of candidate reference region by performing the combination according to the at least one reconstructed reference sub-region for the current block comprises:

determining a first-type candidate reference region according to the reconstructed upper neighboring region and the reconstructed left neighboring region for the current block;
determining a second-type candidate reference region according to the reconstructed upper neighboring region and the reconstructed upper-left neighboring region for the current block;
determining a third-type candidate reference region according to the reconstructed left neighboring region and the reconstructed upper-left neighboring region for the current block; or
determining a fourth-type candidate reference region according to the reconstructed upper neighboring region, the reconstructed left neighboring region, and the reconstructed upper-left neighboring region for the current block.

27. The method of any one of claims 23 to 26, further comprising:
determining a size parameter of the candidate reference region according to a size parameter of the current block and a size parameter of the candidate filter, wherein the size parameter comprises a height and/or a width.

28. The method of claim 27, wherein determining the size parameter of the candidate reference region according to the size parameter of the current block and the size parameter of the candidate filter comprises:

determining a minimum parameter from a height and a width of the current block;
determining a height of an upper reference sub-region and an upper-left reference sub-region of the candidate reference region according to the minimum parameter and a height of the candidate filter minus 1; and
determining a width of a left reference sub-region and the upper-left reference sub-region of the candidate reference region according to the minimum parameter and a width of the candidate filter minus 1.

29. The method of any one of claims 23 to 28, wherein ordering the plurality of candidate filtering models to determine the target filtering-model-candidate list for the current block comprises:

determining a first candidate reference region and a first candidate filter of a first candidate filtering model among the plurality of candidate filtering models;
by taking reference samples in the first candidate reference region as input samples of the first candidate filter, determining a number of output samples of the first candidate filter in the first candidate reference region;
ordering the first candidate filtering model according to the number of samples in the first candidate reference region to obtain a first filtering-model-candidate list; and
obtaining the target filtering-model-candidate list according to the first filtering-model-candidate list.

30. The method of claim 29, wherein ordering the plurality of candidate filtering models to determine the target filtering-model-candidate list for the current block further comprises:

determining coefficients of the first candidate filter according to the first candidate reference region; and
during ordering the first candidate filtering models according to the number of samples in the first candidate reference region, deleting a first candidate filtering model with duplicate coefficients of the first candidate filter to obtain the first filtering-model-candidate list.

31. The method of claim 29 or 30, wherein obtaining the target filtering-model-candidate list according to the first filtering-model-candidate list comprises:

obtaining the target filtering-model-candidate list by reordering the first filtering-model-candidate list based on template matching.

32. The method of claim 31, wherein obtaining the target filtering-model-candidate list by reordering the first filtering-model-candidate list based on the template matching comprises:

determining a second candidate reference region and a second candidate filter of a second candidate filtering model in the first filtering-model-candidate list;
determining coefficients of the second candidate filter according to the second candidate reference region;
obtaining a prediction value of a template of the current block by performing prediction on the template of the current block according to the coefficients of the second candidate filter;
perform cost calculation according to the prediction value and a reconstructed value of the template of the current block to obtain a first cost parameter; and
obtaining the target filtering-model-candidate list by reordering the first filtering-model-candidate list according to the first cost parameter.

33. The method of claim 32, wherein obtaining the prediction value of the template of the current block by performing prediction on the template of the current block according to the coefficients of the second candidate filter comprises:

determining a prediction value of a first template sample in the template of the current block according to the coefficients of the second candidate filter and reconstructed values of reference samples in the second candidate reference region; and
determining a prediction value of a second template sample in the template of the current block according to the coefficients of the second candidate filter, a reconstructed value of a reference sample in the second candidate reference region, and a prediction value of a predicted template sample, wherein the predicted template sample comprises the first template sample and/or the second template sample.

34. The method of claim 32, wherein obtaining the prediction value of the template of the current block by performing prediction on the template of the current block according to the coefficients of the second candidate filter comprises:
obtaining the prediction value of the template of the current block according to the coefficients of the second candidate filter and a reconstructed value of a reference sample in the second candidate reference region.

35. The method of claim 31, further comprising:

determining reordering indication information;
reordering the first filtering-model-candidate list based on the template matching to obtain the target filtering-model-candidate list, based on the reordering indication information indicating that the template matching is used to reorder a filtering-model-candidate list for the current block;
using the first filtering-model-candidate list as the target filtering-model-candidate list, based on the reordering indication information indicating that the template matching technology is not used to reordering the filtering-model-candidate list for the current block; and
encoding the reordering indication information.

36. The method of claim 35, wherein the reordering indication information comprises a first syntax element and a second syntax element, and the first syntax element is used for indicating whether the template matching technology is allowed to be used for the current block; and the second syntax element is used for indicating whether the template matching is allowed to be used to reorder the filtering-model-candidate list for the current block,
wherein determining the reordering indication information comprises:

determining a value of the second syntax element based on the value of the first syntax element being a first value;
determining that the template matching is used to reorder the filtering-model-candidate list for the current block, based on the value of the second syntax element being the first value; and
determining that the template matching technology is not used to reorder a filtering-model-candidate list for the current block, based on the value of the first syntax element being a second value or the value of the second syntax element being the second value.

37. The method of claim 36, wherein the first syntax element comprises at least one of: a sequence-level syntax element, a picture-level syntax element, a slice-level syntax element, and a coding tree unit (CTU)-level syntax element; and

the second syntax element comprises at least one of: a sequence-level syntax element, a picture-level syntax element, a slice-level syntax element, and a CTU-level syntax element.

38. The method of claim 23, wherein determining the target filtering model for the current block according to the target filtering-model-candidate list comprises:

obtaining first $M$ candidate filtering models in the target filtering-model-candidate list sequentially as the target filtering model, $M$ being a positive integer; and
wherein the method further comprises:

based on a decision that the target prediction mode is used for the current block, determining an index value of an optimal filtering model corresponding to the target prediction mode; and
encoding the index value of the optimal filtering model and signalling obtained encoded bits into the bitstream.

39. The method of claim 38, wherein encoding the index value of the optimal filtering model and signalling the encoded bits into the bitstream comprises:

determining $N$ binary symbols indicating the index value of the target filtering model, $N$ being an integer; and
encoding the $N$ binary symbols and signalling the obtained encoded bits into the bitstream.

40. The method of claim 23, wherein determining the target filtering model for the current block according to the target filtering-model-candidate list comprises:
obtaining the first filtering model in the target filtering-model-candidate list as the target filtering model.

41. The method of any one of claims 23 to 40, further comprising:

determining at least one reference sub-region comprised in a current reference region, wherein the current reference region is the target reference region, the first candidate reference region, or the second candidate reference region;
obtaining an autocorrelation coefficient matrix and a cross-correlation coefficient vector for the at least one reference sub-region; and
determining coefficients of a current filter according to the autocorrelation coefficient matrix and the cross-correlation coefficient vector for the at least one reference sub-region.

42. The method of claim 41, further comprising:

determining a plurality of reference sub-regions for the current block;
determining autocorrelation coefficient matrices and the cross-correlation coefficient vectors for the plurality of reference sub-regions according to the plurality of reference sub-regions and the candidate filter; and
storing the autocorrelation coefficient matrices and the cross-correlation coefficient vectors for the plurality of reference sub-regions into a preset buffer,
wherein obtaining the autocorrelation coefficient matrix and the cross-correlation coefficient vector for the at least one reference sub-region comprises:
obtaining the autocorrelation coefficient matrix and the cross-correlation coefficient vector for the at least one reference sub-region from the preset buffer.

43. The method of claim 23, wherein determining the prediction value of the current block by performing intra prediction on the current block according to the coefficients of the target filter comprises:

determining a reconstructed value of a reference sample corresponding to a pixel to be predicted in the current block, wherein the reference sample is in the target reference region; and
determining a prediction value of the pixel to be predicted in the current block according to the coefficients of the target filter and the reconstructed value of the reference sample.

44. The method of claim 23, wherein the target prediction mode comprises an extrapolation filtering mode.

45. A bitstream, wherein

the bitstream is generated by performing bit encoding on information to be encoded, and the information to be encoded comprises at least one of: an index value of a target filtering model for a current block, a residual value of the current block, prediction mode indication information, and reordering indication information of the current block, wherein

the prediction mode indication information is used for indicating whether a target prediction mode is used for the current block; and
the reordering indication information is used for indicating whether template matching is used for reordering a filtering-model-candidate list for the current block.

46. An encoder, comprising a first determining unit, a first prediction unit, and an encoding unit, wherein:

the first determining unit is configured to determine a plurality of candidate filtering models for a current block;
the first determining unit is configured to order the plurality of candidate filtering models to determine a target filtering-model-candidate list for the current block, wherein the candidate filtering models comprises a candidate reference region and a candidate filter;
the first determining unit is configured to determine a target filtering model for the current block according to the target filtering-model-candidate list, wherein the target filtering model comprises a target reference region and a target filter;
the first determining unit is configured to determine coefficients of the target filter according to the target reference region;
the first prediction unit is configured to perform intra prediction on the current block according to the coefficients of the target filter to determine a prediction value of the current block; and
the encoding unit is configured to make an encoding decision according to the prediction value and an original value of the current block to determine whether a target prediction mode is used for the current block and encode prediction mode indication information.

47. An encoder, comprising:

a first memory configured to store a computer program executable by a first processor; and
the first processor configured to perform the method of any one of claims 23 to 44 when executing the computer program.

48. A decoder, comprising a decoding unit, a second determining unit, and a second prediction unit, wherein:

the decoding unit is configured to decode a bitstream to determine that a target prediction mode is used for a current block;
the second determining unit is configured to determine a plurality of candidate filtering models for the current block;
the second determining unit is configured to order the plurality of candidate filtering models to determine a target filtering-model-candidate list for the current block, wherein the candidate filtering models comprises a candidate reference region and a candidate filter;
the second determining unit is configured to determine a target filtering model for the current block according to the target filtering-model-candidate list, wherein the target filtering model comprises a target reference region and a target filter;
the second determining unit is configured to determine coefficients of the target filter according to the target reference region; and
the second prediction unit is configured to perform intra prediction on the current block according to the coefficients of the target filter to determine a prediction value of the current block.

49. A decoder, comprising:

a second memory configured to store a computer program executable by a second processor; and
the second processor configured to perform the method of any one of claims 1 to 22 when executing the computer program.

50. A computer-readable storage medium storing a computer program which, when executed, is operable to implement the method of any one of claims 1 to 22 or the method of any one of claims 23 to 44.

CURRENT
BLOCK

FIG. 1A

CURRENT
BLOCK

FIG. 1B

CURRENT
BLOCK

FIG. 1C

2×Width+13

CURRENT
BLOCK

2×Height

Height

Width

FIG. 2A

2×Width+13

13

CURRENT
BLOCK

Height

Width

FIG. 2B

13

CURRENT
BLOCK

2×Height

Height

Width

FIG. 2C

FIG. 3A

FIG. 3B

FIG. 3C

FILTER WIDTH

HEIGHT

CURRENT
BLOCK

FIG. 4A

FILTER WIDTH

HEIGHT

CURRENT
BLOCK

FIG. 4B

FILTER WIDTH

HEIGHT

CURRENT
BLOCK

FIG. 4C

FILTER WIDTH

HEIGHT

CURRENT
BLOCK

FIG. 5A

FILTER WIDTH

HEIGHT

CURRENT
BLOCK

FIG. 5B

FILTER WIDTH

HEIGHT

CURRENT
BLOCK

FIG. 5C

FILTER WIDTH

HEIGHT

CURRENT
BLOCK

FIG. 6A

FILTER WIDTH

HEIGHT

CURRENT
BLOCK

FIG. 6B

FILTER WIDTH

HEIGHT

CURRENT
BLOCK

FIG. 6C

FIG. 7

FIG. 8

FIG. 9

FIG. 10

INPUT VIDEO

DIVIDE TO
ENCODED BLOCK

100

101
TRANSFORM AND
QUANTIZATION UNIT

QUANTIZED TRANSFORM
COEFFICIENTS

106
INVERSE TRANSFORM AND
INVERSE QUANTIZATION UNIT

102
INTRA ESTIMATION
UNIT

107
FILTER CONTROL
ANALYSIS UNIT

FILTER
CONTROL
DATA

109
ENCODING UNIT

OUTPUT
BITSTREAM

INTRA/INTER
SELECTION

103
INTRA
PREDICTION
UNIT

108
FILTERING UNIT

INTER
PREDICTION
DATA

104
MOTION
COMPENSATION
UNIT

MOTION
DATA

110
DECODED
PICTURE BUFFER
UNIT

OUTPUT VIDEO
SIGNAL

105
MOTION
ESTIMATION UNIT

FIG. 11A

FIG. 11B

FIG. 12

| | |
|---|---|
| DECODE BITSTREAM TO DETERMINE THAT TARGET PREDICTION MODE IS USED FOR CURRENT BLOCK | S1301 |
| DETERMINE MULTIPLE CANDIDATE FILTERING MODELS FOR CURRENT BLOCK | S1302 |
| ORDER MULTIPLE CANDIDATE FILTERING MODELS TO DETERMINE TARGET FILTERING-MODEL-CANDIDATE LIST FOR CURRENT BLOCK, WHERE CANDIDATE FILTERING MODEL INCLUDES CANDIDATE REFERENCE REGION AND CANDIDATE FILTER | S1303 |
| DETERMINE TARGET FILTERING MODEL FOR CURRENT BLOCK ACCORDING TO TARGET FILTERING-MODEL-CANDIDATE LIST. TARGET FILTERING MODEL INCLUDES TARGET REFERENCE REGION AND TARGET FILTER | S1304 |
| DETERMINE COEFFICIENTS OF TARGET FILTER ACCORDING TO TARGET REFERENCE REGION | S1305 |
| DETERMINE PREDICTION VALUE OF CURRENT BLOCK BY PERFORMING INTRA PREDICTION ON CURRENT BLOCK ACCORDING TO COEFFICIENTS OF TARGET FILTER | S1306 |

FIG. 13

UPPER-LEFT
RECONSTRUCTED
REGION

CURRENT
BLOCK

UPPER RECONSTRUCTED
REGION

CURRENT
BLOCK

LEFT
RECONSTRUCTED
REGION

CURRENT
BLOCK

UPPER
RECONSTRUCTED
REGION

CURRENT
BLOCK

LEFT
RECONSTRUCTED
REGION

UPPER-LEFT
RECONSTRUCTED
REGION

UPPER
RECONSTRUCTED
REGION

CURRENT
BLOCK

UPPER-LEFT
RECONSTRUCTED
REGION

LEFT
RECONSTRUCTED
REGION

CURRENT
BLOCK

UPPER-LEFT
RECONSTRUCTED
REGION

UPPER RECONSTRUCTED
REGION

CURRENT
BLOCK

LEFT
RECONSTRUCTED
REGION

FIG. 14

UPPER-LEFT
RECONSTRUCTED
REGION

UPPER RECONSTRUCTED
REGION

LEFT
RECONSTRUCTED
REGION

CURRENT
BLOCK

UPPER-LEFT
RECONSTRUCTED
REGION

UPPER
RECONSTRUCTED
REGION

CURRENT
BLOCK

UPPER-LEFT
RECONSTRUCTED
REGION

LEFT
RECONSTRUCTED
REGION

CURRENT
BLOCK

FIG. 15

FIG. 16

FIG. 17

FIG. 18

FIG. 19A

FIG. 19B

FIG. 19C

FIG. 19D

FIG. 19E

TEMPLATE REGION, ONE ROW AND ONE COLUMN

REFERENCE REGION

PREDICTION DIRECTION, ALL POINTS CAN BE PREDICTED IN PARALLEL

FIG. 20

FIG. 21

| | |
|---|---|
| DETERMINE MULTIPLE CANDIDATE FILTERING MODELS FOR CURRENT BLOCK | S2201 |
| ORDER MULTIPLE CANDIDATE FILTERING MODELS TO DETERMINE TARGET FILTERING-MODEL-CANDIDATE LIST FOR CURRENT BLOCK, WHERE CANDIDATE FILTERING MODEL INCLUDES CANDIDATE REFERENCE REGION AND CANDIDATE FILTER | S2202 |
| DETERMINE TARGET FILTERING MODEL FOR CURRENT BLOCK ACCORDING TO TARGET FILTERING-MODEL-CANDIDATE LIST. TARGET FILTERING MODEL INCLUDES TARGET REFERENCE REGION AND TARGET FILTER | S2203 |
| DETERMINE COEFFICIENTS OF TARGET FILTER ACCORDING TO TARGET REFERENCE REGION | S2204 |
| DETERMINE PREDICTION VALUE OF CURRENT BLOCK BY PERFORMING INTRA PREDICTION ON CURRENT BLOCK ACCORDING TO COEFFICIENTS OF TARGET FILTER | S2205 |
| MAKE ENCODING DECISION ACCORDING TO PREDICTION VALUE AND ORIGINAL VALUE OF CURRENT BLOCK TO DETERMINE WHETHER TARGET PREDICTION MODE IS USED FOR CURRENT BLOCK, AND ENCODE PREDICTION MODE INDICATION INFORMATION | S2206 |

FIG. 22

FIG. 23A       FIG. 23B       FIG. 23C

FIG. 24A

FIG. 24B

FIG. 24C

FIG. 25A

FIG. 25B

FIG. 25C

CURRENT
BLOCK

FIG. 26A

CURRENT
BLOCK

FIG. 26B

270

ENCODER

2701
FIRST DETERMINING UNIT

2702
FIRST PREDICTION UNIT

2703
ENCODING UNIT

## FIG. 27

270

ENCODER

2801
FIRST COMMUNICATION INTERFACE

2804

2803
FIRST PROCESSOR

2802
FIRST MEMEORY

## FIG. 28

290

DECODER

2901
DECODING UNIT

2902
SECOND DETERMINING UNIT

2903
SECOND PREDICTION UNIT

## FIG. 29

290

DECODER

3001

SECOND COMMUNICATION
INTERFACE

3004

3003

3002

SECOND PROCESSOR

SECOND MEMORY

FIG. 30

310

3101

3102

ENCODER

DECODER

FIG. 31

## INTERNATIONAL SEARCH REPORT

International application No.

**PCT/CN2023/115055**

### A. CLASSIFICATION OF SUBJECT MATTER

H04N19/117(2014.01)i;  H04N19/176(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CNKI, CJFD, DWPI, ENTXTC, VCN, WPABSC, JVET, IEEE: 参考, 区域, 样本, 滤波, 插值滤波器, 候选, 模型, 排序, 系数, 帧内预测, reference, region, sample, filter+, interpolation 1w filter+, candidate, model, rank+, coefficient, intra 1w prediction

### C. DOCUMENTS CONSIDERED TO BE RELEVANT

| Category* | Citation of document, with indication, where appropriate, of the relevant passages | Relevant to claim No. |
|---|---|---|
| X | CN 110622515 A (GOOGLE LLC) 27 December 2019 (2019-12-27) description, paragraphs 38-172 | 1-6,16-18, 21-28, 38-40, 43-50 |
| X | WO 2023153891 A1 (LG ELECTRONICS INC.) 17 August 2023 (2023-08-17) description, paragraphs 8-23 | 45 |
| X | CN 112262574 A (HUAWEI TECHNOLOGIES CO., LTD.) 22 January 2021 (2021-01-22) description, paragraphs 115-135 | 45 |
| A | KR 1020220047824 A (LG ELECTRONICS INC.) 19 April 2022 (2022-04-19) entire document | 1-50 |
| A | WO 2018208349 A1 (GOOGLE LLC.) 15 November 2018 (2018-11-15) entire document | 1-50 |
| A | US 2020296388 A1 (INTERDIGITAL VC HOLDINGS, INC.) 17 September 2020 (2020-09-17) entire document | 1-50 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/115055**

| Patent document cited in search report | | | Publication date (day/month/year) | Patent family member(s) | | | Publication date (day/month/year) |
|---|---|---|---|---|---|---|---|
| CN | 110622515 | A | 27 December 2019 | WO | 2018208349 | A1 | 15 November 2018 |
| | | | | JP | 2020520163 | A | 02 July 2020 |
| | | | | JP | 6858277 | B2 | 14 April 2021 |
| | | | | EP | 3622713 | A1 | 18 March 2020 |
| WO | 2023153891 | A1 | 17 August 2023 | | None | | |
| CN | 112262574 | A | 22 January 2021 | | None | | |
| KR | 1020220047824 | A | 19 April 2022 | | None | | |
| WO | 2018208349 | A1 | 15 November 2018 | JP | 2020520163 | A | 02 July 2020 |
| | | | | JP | 6858277 | B2 | 14 April 2021 |
| | | | | EP | 3622713 | A1 | 18 March 2020 |
| US | 2020296388 | A1 | 17 September 2020 | US | 11811975 | B2 | 07 November 2023 |
| | | | | EP | 3632113 | A1 | 08 April 2020 |
| | | | | EP | 3632113 | B1 | 28 February 2024 |
| | | | | US | 2024048731 | A1 | 08 February 2024 |
| | | | | JP | 2023025054 | A | 21 February 2023 |
| | | | | JP | 2020522170 | A | 27 July 2020 |
| | | | | JP | 7179023 | B2 | 28 November 2022 |
| | | | | WO | 2018219663 | A1 | 06 December 2018 |
| | | | | MX | 2019014443 | A | 10 February 2020 |
| | | | | EP | 4336840 | A2 | 13 March 2024 |

Form PCT/ISA/210 (patent family annex) (July 2022)